(19) Europäisches Patentamt
European Patent Office
Office européen des brevets

(11) **EP 4 120 105 A1**

(12) **EUROPEAN PATENT APPLICATION**
published in accordance with Art. 153(4) EPC

(43) Date of publication:
**18.01.2023 Bulletin 2023/03**

(21) Application number: **21784667.4**

(22) Date of filing: **02.04.2021**

(51) International Patent Classification (IPC):
*G06F 21/32* (2013.01)       *G06N 3/08* (2006.01)
*G06F 21/31* (2013.01)

(52) Cooperative Patent Classification (CPC):
**G06F 21/31; G06F 21/32; G06N 3/08**

(86) International application number:
**PCT/CN2021/085319**

(87) International publication number:
**WO 2021/204086 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.04.2020  CN 202010262293**

(71) Applicant: **Huawei Technologies Co., Ltd.
Longgang
Shenzhen, Guangdong 518129 (CN)**

(72) Inventors:
• **CHEN, Dong**
  **Shenzhen, Guangdong 518129 (CN)**
• **LI, Ji**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **IDENTITY AUTHENTICATION METHOD, AND METHOD AND DEVICE FOR TRAINING IDENTITY AUTHENTICATION MODEL**

(57)     This application discloses an identity authentication method, a method and an apparatus for training an identity authentication model, and a computer-readable medium in the artificial intelligence (AI) field. The identity authentication method includes: obtaining first operation behavior data and second operation behavior data of a to-be-authenticated user; obtaining, by using a first authentication model by inputting the first operation behavior data, a first recognition result output by the first authentication model; obtaining, by using a second authentication model by inputting the second operation behavior data, a second recognition result output by the second authentication model, where the first authentication model and the second authentication model are an anomaly detection model and a classification model respectively; and inputting the first recognition result and the second recognition result into a decision fusion model to obtain an output identity authentication result. According to the method in this application, decision fusion is performed based on at least two recognition results, so that accuracy of identity authentication can be improved.

800

Obtain first operation behavior data of a to-be-authenticated user; and obtain second operation behavior data of the to-be-authenticated user — S810

Obtain, by using a first authentication model by inputting the first operation behavior data, a first recognition result output by the first authentication model; and obtain, by using a second authentication model by inputting the second operation behavior data, a second recognition result output by the second authentication model — S820

Input the first recognition result and the second recognition result into a decision fusion model to obtain an output identity authentication result — S830

FIG. 8

## Description

This application claims priority to Chinese Patent Application No. 202010262293.6, filed with the China National Intellectual Property Administration on April 6, 2020 and entitled "IDENTITY AUTHENTICATION METHOD, AND METHOD AND APPARATUS FOR TRAINING IDENTITY AUTHENTICATION MODEL", which is incorporated herein by reference in its entirety.

## TECHNICAL FIELD

This application relates to the field of artificial intelligence, and more specifically, to an identity authentication method, and a method and an apparatus for training an identity authentication model.

## BACKGROUND

Artificial intelligence (AI) is a theory, a method, a technology, or an application system that simulates, extends, and expands human intelligence by using a digital computer or a machine controlled by a digital computer, to sense an environment, obtain knowledge, and achieve an optimal result by using the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have functions of perception, inference, and decision-making. Researches in the field of artificial intelligence include robotics, natural language processing, computer vision, decision-making and inference, human-computer interaction, recommendation and search, basic theories of AI, and the like.

With popularity of intelligent devices, users often set identity authentication protection measures to protect personal property and privacy. However, conventional identity authentication modes such as password authentication and pattern authentication have risks of shoulder surfing and stealing. Biometric identity authentication modes such as fingerprint authentication or face authentication may have risks of spoofing attacks. Currently, system security can be further improved in a behavior identity authentication mode. Behavior identity authentication is a process of modeling a user's past behaviors by using a machine learning algorithm, to identify recent behaviors and implement identity authentication. An existing behavior identity authentication mode cannot meet an expectation in terms of an anti-attack capability and a recognition rate of an authenticated user. In an actual behavior identity authentication process, if a capability of recognizing an authenticated user is poor, the authenticated user is often falsely considered as an unauthenticated user, and poor user experience is caused. If an anti-attack capability is poor, an unauthenticated user is falsely considered as an authenticated user, and identity authentication exists in name only.

Therefore, how to improve accuracy of identity authentication becomes an urgent technical problem to be resolved.

## SUMMARY

This application provides an identity authentication method, and a method and an apparatus for training an identity authentication model, to improve accuracy of identity authentication.

According to a first aspect, an identity authentication method is provided, where the method includes: obtaining first operation behavior data of a to-be-authenticated user; obtaining second operation behavior data of the to-be-authenticated user; obtaining, by using a first authentication model by inputting the first operation behavior data, a first recognition result output by the first authentication model; obtaining, by using a second authentication model by inputting the second operation behavior data, a second recognition result output by the second authentication model, where the first authentication model and the second authentication model are an anomaly detection model and a classification model respectively; and inputting the first recognition result and the second recognition result into a decision fusion model to obtain an output identity authentication result, where the decision fusion model is used to determine the identity authentication result based on weight parameters of the first recognition result and the second recognition result.

An identity authentication model includes the first authentication model, the second authentication model, and the decision fusion model. It should be understood that the identity authentication model may include a plurality of authentication models and the decision fusion model. Recognition results output by the plurality of authentication models are input into the decision fusion model, and the decision fusion model outputs the identity authentication result.

It should be understood that the first operation behavior data and the second operation behavior data may be the same or different.

Optionally, the first recognition result and/or the second recognition result include/includes that the to-be-authenticated user is an authenticated user or that the to-be-authenticated user is an unauthenticated user.

Optionally, the first recognition result and/or the second recognition result include/includes a probability that the to-be-authenticated user is an authenticated user or a probability that the to-be-authenticated user is an unauthenticated user.

For example, if one of the first recognition result and the second recognition result is an authenticated user, the identity authentication result is an authenticated user. Alternatively, if one of the first recognition result and the second recognition result is an unauthenticated user, the identity authentication result is an unauthenticated user.

The identity authentication result output by the decision fusion model may include that the to-be-authenticated user is an authenticated user or that the to-be-authenticated user is an unauthenticated user. Alternatively, the identity authentication result output by the decision fusion model may include a probability that the to-be-authenticated user is an authenticated user or a probability that the to-be-authenticated user is an unauthenticated user.

In this embodiment of this application, recognition results of two authentication models are input into the decision fusion model for decision fusion, to obtain an identity authentication result. In this way, accuracy of identity authentication can be improved. In addition, operation behavior data of the user is used for identity authentication, and a use habit of the user is not changed. In this way, implicit authentication is implemented.

In addition, when identity authentication is implemented by using the anomaly detection model, an anti-attack capability of the model cannot be ensured. If the anti-attack capability is poor, an unauthenticated user is falsely considered as an authenticated user, and identity authentication exists in name only. When identity authentication is implemented by using the classification model, a recognition rate of an authenticated user cannot be ensured. If a capability of recognizing an authenticated user is poor, the authenticated user is often falsely considered as an unauthenticated user, and poor user experience is caused. In this embodiment of this application, the anomaly detection model and the classification model are used. On one hand, the recognition rate of the authenticated user is improved by using the anomaly detection model. On the other hand, the anti-attack capability is improved by using the classification model, and a recognition capability of the identity authentication model is improved on the whole.

With reference to the first aspect, in some implementations of the first aspect, the first operation behavior data and/or the second operation behavior data are/is data collected by a sensor.

For example, the sensor includes a motion sensor and/or a touchscreen sensor.

The operation behavior data of the to-be-authenticated user may be data obtained after raw data collected by the sensor is processed.

For example, the raw data collected by the touchscreen sensor includes a time stamp, an x/y-axis coordinate of a touch point, a touch area, touch pressure, an action , a screen orientation, and the like. The raw data collected by the motion sensor includes a time stamp, acceleration x/y/z-axis data, gyroscope x/y/z-axis data, and the like. It should be understood that the foregoing is merely an example, and the data collected by the sensor may include any one or more items of the foregoing, or may include other data.

With reference to the first aspect, in some implementations of the first aspect, a model parameter of the first authentication model is obtained by performing training based on first sample data, the first sample data includes first operation behavior sample data and a label corresponding to the first operation behavior sample data, and the label corresponding to the first operation behavior sample data is used to indicate that a user corresponding to the first operation behavior sample data is an authenticated user or an unauthenticated user.

A model parameter of the second authentication model is obtained by performing training based on fifth sample data, the fifth sample data includes fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user.

With reference to the first aspect, in some implementations of the first aspect, the anomaly detection model may use a one-class support vector machine SVM or an isolation forest, and the classification model may use an SVM or a neural network or the like.

In this embodiment of this application, both the anomaly detection model and the classification model may use a small-scale algorithm. For example, the anomaly detection model may use a one-class support vector machine SVM, and the classification model may use a two-class SVM. In this way, in an identity authentication process, algorithm overheads are low, and additional hardware support is not required. The identity authentication model can be trained on a user terminal side. Therefore, secure data storage is implemented on the user terminal side, and a privacy security problem caused by uploading to a cloud is avoided.

With reference to the first aspect, in some implementations of the first aspect, a weight parameter of the decision fusion model is obtained by inputting second operation behavior sample data in second sample data into the first authentication model and the second authentication model to obtain a recognition result that is of the second operation behavior sample data and is output by the first authentication model and the second authentication model, and performing training by using the recognition result of the second operation behavior sample data as an input of the decision fusion model and a label corresponding to the second operation behavior sample data as a target output of the decision fusion model, the second sample data includes the second operation behavior sample data and the label corresponding to the second operation behavior sample data, and the label corresponding to the second operation behavior sample data is used to indicate that a user corresponding to the second operation behavior sample data is an authenticated user or an unauthenticated user.

In this embodiment of this application, a better model parameter is obtained by training the decision fusion model. For example, a better weight proportion of the authentication model is obtained. Therefore, accuracy of identity authentication is further improved.

With reference to the first aspect, in some implementations of the first aspect, the first recognition result includes a matching score corresponding to the first operation behavior data and/or a matching result corresponding to the first operation behavior data; the second recognition result includes a matching score corresponding to the second operation behavior data and/or a matching result corresponding to the second operation behavior data; the matching score corresponding to the first operation behavior data is used to indicate a probability that the to-be-authenticated user is recognized as an authenticated user, the matching result corresponding to the first operation behavior data is used to indicate that the to-be-authenticated user is recognized as an authenticated user or an unauthenticated user, and the matching result corresponding to the first operation behavior data includes at least two matching results determined based on at least two thresholds and the matching score corresponding to the first operation behavior data; and the matching score corresponding to the second operation behavior data is used to indicate a probability that the to-be-authenticated user is recognized as an authenticated user, the matching result corresponding to the second operation behavior data is used to indicate that the to-be-authenticated user is recognized as an authenticated user or an unauthenticated user, and the matching result corresponding to the second operation behavior data includes at least two matching results determined based on at least two thresholds and the matching score corresponding to the second operation behavior data.

The following describes the first recognition result and the second recognition result by using an example.

Recognition results output by the two authentication models respectively include: a recognition result output by the anomaly detection model and a recognition result output by the classification model.

The recognition result output by the anomaly detection model includes a matching score A corresponding to the first operation behavior data and output by the anomaly detection model and a matching result A corresponding to the first operation behavior data.

For example, the at least two thresholds include a first threshold A and a second threshold A, and the first threshold A is greater than the second threshold A. The matching result A corresponding to the first operation behavior data and output by the anomaly detection model includes a matching result determined based on the first threshold A and a matching result determined based on the second threshold A. When the matching score A is greater than or equal to the first threshold A, the matching result determined based on the first threshold A is an authenticated user; or when the matching score A is less than the first threshold A, the matching result determined based on the first threshold A is an unauthenticated user. When the matching score A is greater than or equal to the second threshold A, the matching result determined based on the second threshold A is an authenticated user; or when the matching score A is less than the second threshold A, the matching result determined based on the second threshold A is an unauthenticated user.

The recognition result output by the classification model includes a matching score B corresponding to the second operation behavior data and output by the classification model and a matching result B corresponding to the second operation behavior data.

For example, the at least two thresholds include a first threshold B and a second threshold B, and the first threshold B is greater than the second threshold B. The matching result B corresponding to the second operation behavior data and output by the classification model includes a matching result determined based on the first threshold B and a matching result determined based on the second threshold B. When the matching score B is greater than or equal to the first threshold B, the matching result determined based on the first threshold B is an authenticated user; or when the matching score B is less than the first threshold B, the matching result determined based on the first threshold B is an unauthenticated user. When the matching score B is greater than or equal to the second threshold B, the matching result determined based on the second threshold B is an authenticated user; or when the matching score B is less than the second threshold B, the matching result determined based on the second threshold B is an unauthenticated user.

For example, the at least two thresholds may be determined based on accuracy of the recognition result.

In this embodiment of this application, the recognition result output by the authentication model includes a matching score and at least two matching results, and different performance of the authentication model can be adjusted by using different thresholds, so that performance of the authentication model can reach an expectation. For example, an anti-attack capability and an owner recognition rate of the model are adjusted by using different thresholds, so that performance of the authentication model can be balanced. In addition, different from an existing authentication model that can only provide one recognition result, this solution can provide more features for the decision fusion model. In this way, authentication accuracy of the decision fusion model is improved, and accuracy of identity authentication is improved.

With reference to the first aspect, in some implementations of the first aspect, the inputting the first recognition result and the second recognition result into a decision fusion model to obtain an output identity authentication result includes: obtaining a first score feature based on the matching score corresponding to the first operation behavior data; obtaining a second score feature based on the matching score corresponding to the second operation behavior data; and inputting the first score feature, the second score feature, the first recognition result, and the second recognition result into the decision fusion model to obtain the output identity authentication result.

For example, the obtaining a score feature based on the matching score corresponding to the first operation behavior data includes: performing a mathematical operation on the matching score to obtain the score feature.

In this embodiment of this application, feature extraction is performed on the matching score, to further provide more features for the decision fusion model. In this way, authentication accuracy of the decision fusion model is improved, and accuracy of identity authentication is improved.

With reference to the first aspect, in some implementations of the first aspect, the first operation behavior data and/or the second operation behavior data include/includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

With reference to the first aspect, in some implementations of the first aspect, a model parameter of the authentication model is obtained by performing training based on third operation behavior sample data in third sample data and an identity authentication result corresponding to the third operation behavior sample data; the identity authentication result corresponding to the third operation behavior sample data is obtained by inputting the third operation behavior sample data into the first authentication model and the second authentication model to obtain a recognition result of the third operation behavior sample data, and inputting the recognition result of the third operation behavior sample data into the decision fusion model; and the third sample data includes the third operation behavior sample data.

In the process of obtaining sample data, incorrect data may be introduced due to a conscious or unconscious behavior of the user, and consequently, an error is caused in a label corresponding to the sample data. In this embodiment of this application, the authentication model is trained again based on the identity authentication result of the decision fusion model, and the authentication model is trained again by using an output of the authentication model to implement feedback. Therefore, accuracy of the authentication model can be further improved, and accuracy of the identity authentication model is further improved.

According to a second aspect, a method for training an identity authentication model is provided, where the identity authentication model includes a first authentication model, a second authentication model, and a decision fusion model, the first authentication model and the second authentication model are an anomaly detection model and a classification model respectively, and the method includes: obtaining second sample data, where the second sample data includes second operation behavior sample data and a label corresponding to the second operation behavior sample data, and the label corresponding to the second operation behavior sample data is used to indicate that a user corresponding to the second operation behavior sample data is an authenticated user or an unauthenticated user; inputting the second operation behavior sample data in the second sample data into the first authentication model and the second authentication model to obtain a recognition result of the second operation behavior sample data, where a model parameter of the first authentication model is obtained by performing training based on first sample data, the first sample data includes first operation behavior sample data and a label corresponding to the first operation behavior sample data, the label corresponding to the first operation behavior sample data is used to indicate that a user corresponding to the first operation behavior sample data is an authenticated user or an unauthenticated user, a model parameter of the second authentication model is obtained by performing training based on fifth sample data, the fifth sample data includes fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user; and performing training by using the recognition result of the second operation behavior sample data as an input of the decision fusion model and the label corresponding to the second operation behavior sample data as a target output of the decision fusion model, to obtain a trained decision fusion model.

In this embodiment of this application, the operation behavior data of the authenticated user may be referred to as a positive sample, and the operation behavior data of the unauthenticated user may be referred to as a negative sample.

The sample data may be determined based on raw data collected by a sensor. Specifically, feature data may be extracted from the raw data to obtain the sample data. The sensor may include a touchscreen sensor and/or a motion sensor.

Alternatively, the sample data may include preset data.

For example, the positive sample may be determined based on the raw data collected by the sensor, and the negative sample may be preset data.

In this embodiment of this application, recognition results of two authentication models are input into the decision fusion model for decision fusion, to obtain an identity authentication result. By training the decision fusion model, accuracy of identity authentication can be improved. In addition, operation behavior data of the user is used for identity authentication, and a use habit of the user is not changed. In this way, implicit authentication is implemented.

In addition, the anomaly detection model and the classification model are used. On one hand, a recognition rate of an authenticated user is improved by using the anomaly detection model. On the other hand, an anti-attack capability is improved by using the classification model, and a recognition capability of the identity authentication model is improved on the whole.

In addition, both the anomaly detection model and the classification model may use a small-scale algorithm. For example, the anomaly detection model may use a one-class support vector machine SVM, and the classification model may use a two-class SVM. In this way, in an identity authentication process, algorithm overheads are low, and additional hardware support is not required. The identity authentication model can be trained on a user terminal side. Therefore, secure data storage is implemented on the user terminal side, and a privacy security problem caused by uploading to a cloud is avoided.

It should be noted that the first sample data and the second sample data may be the same or different.

With reference to the second aspect, in some implementations of the second aspect, the recognition result of the second operation behavior sample data includes a recognition result output by the first authentication model and a recognition result output by the second authentication model; the recognition result output by the first authentication model includes a matching score corresponding to the second operation behavior sample data and output by the first authentication model and/or a matching result corresponding to the second operation behavior sample and output by the first authentication model; the recognition result output by the second authentication model includes a matching score corresponding to the second operation behavior sample data and output by the second authentication model and/or a matching result corresponding to the second operation behavior sample data and output by the second authentication model; and the matching score corresponding to the second operation behavior sample data is used to indicate a probability that the user corresponding to the second operation behavior sample data is recognized as an authenticated user, the matching result corresponding to the second operation behavior sample data is used to indicate that the user corresponding to the second operation behavior sample data is recognized as an authenticated user or an unauthenticated user, and the matching result corresponding to the second operation behavior sample data includes at least two matching results determined based on at least two thresholds and the matching score corresponding to the second operation behavior sample data.

It should be understood that at least two thresholds of the two authentication models may be different.

For example, the two authentication models are the anomaly detection model and the classification model respectively. The recognition result of the second operation behavior sample data includes: a recognition result that is of the second operation behavior sample data and is output by the anomaly detection model and a recognition result that is of the second operation behavior sample data and is output by the classification model.

The recognition result that is of the second operation behavior sample data and is output by the anomaly detection model includes: a matching score A corresponding to the second operation behavior sample data and output by the anomaly detection model and a matching result A corresponding to the second operation behavior sample data.

For example, the at least two thresholds include a first threshold A and a second threshold A, and the first threshold A is greater than the second threshold A. The matching result A corresponding to the second operation behavior sample data and output by the anomaly detection model includes a matching result determined based on the first threshold A and a matching result determined based on the second threshold A. When the matching score A is greater than or equal to the first threshold A, the matching result determined based on the first threshold A is an authenticated user; or when the matching score A is less than the first threshold A, the matching result determined based on the first threshold A is an unauthenticated user. When the matching score A is greater than or equal to the second threshold A, the matching result determined based on the second threshold A is an authenticated user; or when the matching score A is less than the second threshold A, the matching result determined based on the second threshold A is an unauthenticated user.

The recognition result output by the classification model includes a matching score B corresponding to the second operation behavior sample data and output by the classification model and a matching result B corresponding to the second operation behavior sample data.

For example, the at least two thresholds include a first threshold B and a second threshold B, and the first threshold B is greater than the second threshold B. The matching result B corresponding to the second operation behavior sample data and output by the classification model includes a matching result determined based on the first threshold B and a matching result determined based on the second threshold B. When the matching score B is greater than or equal to the first threshold B, the matching result determined based on the first threshold B is an authenticated user; or when the matching score B is less than the first threshold B, the matching result determined based on the first threshold B is an unauthenticated user. When the matching score B is greater than or equal to the second threshold B, the matching result determined based on the second threshold B is an authenticated user; or when the matching score B is less than the second threshold B, the matching result determined based on the second threshold B is an unauthenticated user.

The first threshold A and the first threshold B may be different or the same. The second threshold A and the second threshold B may be the same or different.

For example, the at least two thresholds may be determined based on accuracy of recognition results corresponding to the second operation behavior sample data and output by the two authentication models.

In this embodiment of this application, the recognition results output by the two authentication models include a matching score and at least two matching results. Different from an existing authentication model that can provide only one recognition result, this solution can provide more features for the decision fusion model. In this way, a better decision fusion model is trained, authentication accuracy of the decision fusion model is improved, and accuracy of identity authentication is improved.

With reference to the second aspect, in some implementations of the second aspect, the at least two thresholds include a first threshold, and the method further includes: obtaining fourth sample data, where the fourth sample data includes fourth operation behavior sample data and a label corresponding to the fourth operation behavior sample data, and the label corresponding to the fourth operation behavior sample data is used to indicate that a user corresponding to the fourth operation behavior sample data is an authenticated user or an unauthenticated user; inputting the fourth operation behavior sample data into the first authentication model to obtain a matching score corresponding to the fourth operation behavior sample data and output by the first authentication model, where the matching score corresponding to the fourth operation behavior sample data is used to indicate a probability that the user corresponding to the fourth operation behavior sample data is recognized as an authenticated user; determining, based on a plurality of candidate thresholds, a plurality of candidate matching results corresponding to the matching score corresponding to the fourth operation behavior sample data, where the plurality of candidate matching results are used to indicate that the user corresponding to the fourth operation behavior sample data is recognized as an authenticated user or an unauthenticated user; and determining a candidate threshold corresponding to a candidate matching result whose accuracy meets a preset condition in the plurality of candidate matching results, as the first threshold.

For example, the preset condition may be that accuracy of the candidate matching result reaches a set threshold.

It should be noted that the first threshold of the second authentication model may also be determined in the foregoing manner, and details are not described herein again.

In this embodiment of this application, the first threshold that meets the preset condition is determined from the candidate thresholds, and different performance of the authentication model can be adjusted by using different first thresholds, so that performance of the authentication model reaches an expectation. For example, an anti-attack capability and an owner recognition rate of the model are adjusted by using different thresholds. In this way, a better decision fusion model is trained, authentication accuracy of the decision fusion model is improved, and accuracy of identity authentication is improved .

With reference to the second aspect, in some implementations of the second aspect, the performing training by using the recognition result of the second operation behavior data as an input of the decision fusion model and the label corresponding to the second operation behavior data as a target output of the decision fusion model, to obtain a trained decision fusion model includes: obtaining a first score feature of the second operation behavior sample data based on the matching score corresponding to the second operation behavior sample data and output by the first authentication model; obtaining a second score feature of the second operation behavior sample data based on the matching score corresponding to the second operation behavior sample data and output by the second authentication model; and performing training by using the first score feature of the second operation behavior sample data, the second score feature of the second operation behavior sample data, and the recognition result of the second operation behavior sample data as an input of the decision fusion model, and using the label corresponding to the second operation behavior sample data as a target output of the decision fusion model.

In this embodiment of this application, feature extraction is performed on the matching score, to further provide more features for the decision fusion model. In this way, a better decision fusion model is trained, authentication accuracy of the decision fusion model is improved, and accuracy of identity authentication is improved.

With reference to the second aspect, in some implementations of the second aspect, the second operation behavior sample data includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

The first operation behavior sample data, third operation behavior sample data, the fourth operation behavior sample data, or the fifth operation behavior sample data may also include at least one of the foregoing data.

With reference to the second aspect, in some implementations of the second aspect, the second sample data is obtained by performing screening based on sliding duration of the user on a touchscreen and/or a quantity of touch points of the user on the touchscreen.

Specifically, before the feature data is extracted from the raw data collected by the sensor, the raw data may be preprocessed based on the sliding duration of the user on the touchscreen and/or the quantity of touch points of the user on the touchscreen, so that valid operation behavior data is screened out. Then the feature data is extracted from the valid operation behavior data to obtain the second sample data.

For example, if the quantity of touch points of the user is greater than a preset threshold, a touch behavior is valid, and operation behavior data with the quantity of touch points of the user being greater than the preset threshold is obtained through screening from the raw data and is used as the valid operation behavior data. Then the feature data is extracted from the valid operation behavior data to obtain the second sample data.

Because the user may generate an abnormal behavior consciously or unconsciously, after such data is collected and then used as a training sample, accuracy of the training sample is affected, and further, an identity authentication result is affected. In this embodiment of this application, screening is performed on the raw data, to remove abnormal operation behavior data of the user. Therefore, accuracy of the training sample is improved, and accuracy of model training is improved.

With reference to the second aspect, in some implementations of the second aspect, the method further includes: obtaining third sample data, where the third sample data includes third operation behavior sample data; inputting the third operation behavior sample data into the first authentication model to obtain a recognition result that is of the third operation behavior sample data and is output by the first authentication model; inputting the third operation behavior sample data into the second authentication model to obtain a recognition result that is of the third operation behavior sample data and is output by the second authentication model; inputting the recognition result that is of the third operation behavior sample data and is output by the first authentication model and the recognition result that is of the third operation behavior sample data and is output by the second authentication model, into the trained decision fusion model to obtain an identity authentication result corresponding to the third operation behavior sample data; and training the first authentication model and/or the second authentication model based on the third operation behavior sample data and the identity authentication result corresponding to the third operation behavior sample data.

In other words, after the at least two authentication models are trained based on the first sample data, the two authentication models may be trained again based on the third operation behavior sample data and the identity authentication result corresponding to the third operation behavior sample data.

For example, the first operation behavior sample data and the third operation behavior sample data may include same sample data, and the training the two authentication models based on the third operation behavior sample data and the identity authentication result corresponding to the third operation behavior sample data includes: screening the first sample data based on the label corresponding to the first operation behavior sample data and the identity authentication result corresponding to the third operation behavior sample data, and training the at least two authentication models again based on the screened first sample data.

Specifically, sample data whose label is different from the identity authentication result corresponding to the third operation behavior sample data may be removed from the first sample data.

In the process of obtaining sample data, incorrect data may be introduced due to a conscious or unconscious behavior of the user, and consequently, an error is caused in a label corresponding to the sample data. In this embodiment of this application, the authentication model is trained again based on the identity authentication result of the decision fusion model, and the authentication model is trained again by using an output of the authentication model to implement feedback. Therefore, accuracy of the authentication model can be further improved, and accuracy of the identity authentication model is further improved.

It should be understood that extensions, definitions, explanations, and descriptions of related content in the first aspect are also applicable to same content in the second aspect.

According to a third aspect, an identity authentication apparatus is provided, where the apparatus includes a module or unit configured to perform the method in any one of the first aspect or the implementations of the first aspect.

According to a fourth aspect, an apparatus for training an identity authentication model is provided, where the apparatus includes a module or unit configured to perform the method in any one of the second aspect or the implementations of the second aspect.

According to a fifth aspect, an identity authentication apparatus is provided and includes an input/output interface, a processor, and a memory. The processor is configured to control the input/output interface to send and receive information. The memory is configured to store a computer program. The processor is configured to invoke the computer program from the memory and run the computer program, so that the identity authentication apparatus performs the method in any one of the first aspect or the implementations of the first aspect.

Optionally, the apparatus may be a terminal device/server, or may be a chip in the terminal device/server.

Optionally, the memory may be located in the processor, and for example, may be a cache in the processor. The memory may alternatively be located outside the processor and independent of the processor, and for example, may be an internal memory of the apparatus.

According to a sixth aspect, an apparatus for training an identity authentication model is provided and includes an input/output interface, a processor, and a memory. The processor is configured to control the input/output interface to send and receive information. The memory is configured to store a computer program. The processor is configured to invoke the computer program from the memory and run the computer program, so that the authentication model performs the method in any one of the first aspect or the implementations of the first aspect.

Optionally, the training apparatus may be a terminal device/server, or may be a chip in the terminal device/server.

Optionally, the memory may be located in the processor, and for example, may be a cache in the processor. The memory may alternatively be located outside the processor and independent of the processor, and for example, may be an internal memory of the training apparatus.

According to a seventh aspect, a computer program product is provided. The computer program product includes computer program code. When the computer program code is run on a computer, the computer is enabled to perform the methods in the foregoing aspects.

It should be noted that a part or all of the computer program code may be stored in a first storage medium. The first storage medium may be packaged with a processor, or may be packaged separately from a processor. This is not specifically limited in the embodiments of this application.

According to an eighth aspect, a computer-readable medium is provided. The computer-readable medium stores program code. When the computer program code is running on a computer, the computer is enabled to perform the methods in the foregoing aspects.

According to a ninth aspect, a chip is provided. The chip includes a processor and a data interface. The processor reads, through the data interface, instructions stored in a memory, to perform the method in the methods in the foregoing aspects.

Optionally, in an implementation, the chip may further include the memory, and the memory stores the instructions. The processor is configured to execute the instructions stored in the memory, and when the instructions are executed, the processor is configured to perform the method in any implementation of the first aspect or the second aspect.

The foregoing chip may be specifically a field programmable gate array (FPGA) or an application-specific integrated circuit (ASIC).

**BRIEF DESCRIPTION OF DRAWINGS**

FIG. 1 is a schematic diagram of an artificial intelligence main framework according to an embodiment of this application;

FIG. 2 is a schematic diagram of a structure of a system architecture according to an embodiment of this application;

FIG. 3 is a schematic diagram of a structure of another system architecture according to an embodiment of this application;

FIG. 4 is a schematic diagram of a structure of still another system architecture according to an embodiment of this application;

FIG. 5 is a schematic diagram of a structure of an identity authentication module according to an embodiment of this application;

FIG. 6 is a schematic flowchart of a method for training an identity authentication model according to an embodiment of this application;

FIG. 7 is a schematic flowchart of another method for training an identity authentication model according to an embodiment of this application;

FIG. 8 is a schematic flowchart of an identity authentication method according to an embodiment of this application;

FIG. 9 is a schematic flowchart of decision fusion according to an embodiment of this application;

FIG. 10 is another schematic flowchart of decision fusion according to an embodiment of this application;

FIG. 11 is a schematic flowchart of an application method according to an embodiment of this application;

FIG. 12 is a schematic diagram of an application scenario according to an embodiment of this application;

FIG. 13 is a schematic diagram of another application scenario according to an embodiment of this application;

FIG. 14 is a schematic diagram of still another application scenario according to an embodiment of this application;

FIG. 15 is a schematic block diagram of an apparatus for training an identity authentication model according to an embodiment of this application;

FIG. 16 is a schematic block diagram of an identity authentication apparatus according to an embodiment of this application;

FIG. 17 is a schematic block diagram of an apparatus for training an identity authentication model according to an embodiment of this application;

FIG. 18 is a schematic block diagram of an identity authentication apparatus according to an embodiment of this application; and

FIG. 19 is a schematic block diagram of an identity authentication apparatus and an apparatus for training an identity authentication model according to an embodiment of this application.

## DESCRIPTION OF EMBODIMENTS

The following describes the technical solutions in the embodiments of this application with reference to the accompanying drawings in the embodiments of this application.

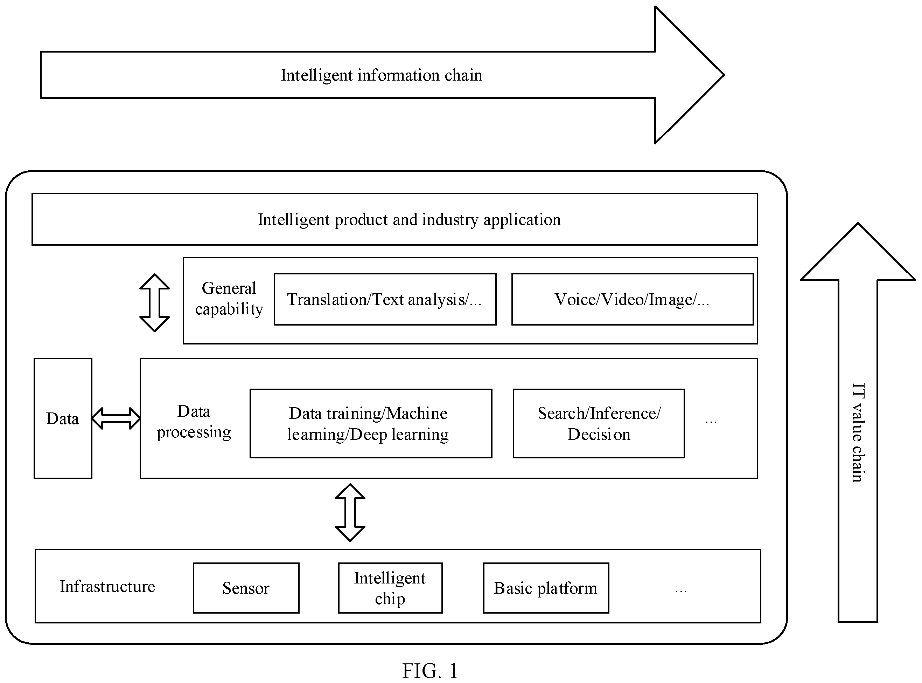

FIG. 1 is a schematic diagram of an artificial intelligence main framework. The main framework describes an overall working procedure of an artificial intelligence system, and is applicable to a requirement of the general artificial intelligence field.

The following describes in detail the foregoing artificial intelligence main framework from two dimensions: an "intelligent information chain" (horizontal axis) and an "information technology (IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides calculation capability support for the artificial intelligence system, communicates with an external world, and implements support by using a basic platform.

The infrastructure can communicate with the outside by using a sensor, and a calculation capability of the infrastructure can be provided by an intelligent chip.

The intelligent chip herein may be a hardware acceleration chip such as a central processing unit (CPU), a neural-network processing unit (NPU), a graphics processing unit (GPU), an application-specific integrated circuit (ASIC), or a field programmable gate array (FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data. Then, the data is provided to an intelligent chip in a distributed computing system provided by the basic platform, for computing.

(2) Data

Data from a higher layer of the infrastructure is used to indicate a data source in the artificial intelligence field. The data relates to a graph, an image, voice, and text, further relates to internet of things data of a conventional device, and includes service data of an existing system and perception data such as force, displacement, a liquid level, a temperature, and humidity.

(3) Data processing

The foregoing data processing usually includes a processing manner such as data training, machine learning, deep learning, search, inference, or decision-making.

In machine learning and deep learning, intelligent information of the data may be modeled, extracted, preprocessed, trained, or the like in a symbolized and formalized manner.

Inference is a process of simulating intelligent human inference methods in computers or intelligent systems and using, based on an inference control policy, formalized information to carry out machine thinking and resolve problems, and typical functions are search and matching.

Decision-making is a process of making a decision after intelligent information inference, and usually provides functions such as classification, ranking, and prediction.

(4) General capability

After data processing mentioned above is performed on data, some general capabilities may be further formed based on a data processing result, for example, an algorithm or a general system, such as translation, text analysis, computer vision processing, speech recognition, and image recognition.

(5) Smart product and industry application

Smart products and industry applications are products and applications of the artificial intelligence system in various fields, and are package of an overall solution of the artificial intelligence. Decision-making for intelligent information is productized and an application is implemented. Application fields mainly include smart manufacturing, smart transportation, smart home, smart health care, smart security, autonomous driving, safe city, intelligent terminal, and the like.

The embodiments of this application may be applied to a scenario in which identity authentication is required. For example, a method provided in the embodiments of this application can be applied to scenarios in which identity authentication is required, such as intelligent terminal unlocking, application software (APP) login, and secure payment.

The following briefly describes two common application scenarios.

Unlocking a terminal device:

When a screen of a terminal device (for example, a mobile phone) is in a screen locked state, a user needs to unlock the screen before using the terminal device. Unlocking the screen through identity authentication can improve system security, and protect property, privacy security, and the like of the user.

The screen is unlocked by using an identity authentication method in the embodiments of this application, so that an authenticated user and an unauthenticated user can be more accurately recognized, thereby improving system security.

A neural network suitable for album classification can be obtained or optimized. Then, the neural network may be used to classify images, to label images of different classes, so as to facilitate viewing and searching by the user. In addition, classification labels of the images may also be provided for an album management system to perform classification management. In this way, management time of the user is saved, album management efficiency is improved, and user experience is improved.

Secure payment:

When the terminal device (for example, a mobile phone) is used for payment, an identity of the user needs to be authenticated before the user can perform a payment operation, so that property, privacy security, and the like of the user are protected.

By using the identity authentication method in the embodiments of this application, an authenticated user and an unauthenticated user can be more accurately recognized, thereby improving system security.

To facilitate understanding of the embodiments of this application, the following first describes related concepts of related terms in the embodiments of this application.

(1) Support vector machine (SVM)

The support vector machine is a two-class classification model, and is intended to find a hyperplane to segment the sample data. A learning policy of the SVM is interval maximization, which can be formalized as solving a convex quadratic programming problem.

(2) Neural network

The neural network may include neurons. The neuron may be an operation unit that uses $x_s$ and an intercept of 1 as inputs, where an output of the operation unit may be as follows:

$$h_{W,b}(x) = f(W^T x) = f(\sum_{s=1}^{n} W_s x_s + b)$$

$$(1\text{-}1)$$

Herein, s = 1, 2, ..., n, n is a natural number greater than 1, $W_s$ represents a weight of $x_s$, b represents a bias of the neuron, and f represents an activation function of the neuron, where the activation function is used to introduce a non-linear characteristic into the neural network, to convert an input signal in the neuron into an output signal. The output signal of the activation function may be used as an input of a next convolutional layer. The activation function may be a sigmoid function. The neural network is a network constituted by connecting a plurality of single neurons together. To be specific, an output of one neuron may be an input of another neuron. An input of each neuron may be connected to a local receptive field of a previous layer to extract a feature of the local receptive field. The local receptive field may be a region including several neurons.

(3) Deep neural network

The deep neural network (DNN) is also referred to as a multi-layer neural network, and may be understood as a neural network having a plurality of hidden layers. The DNN is divided based on locations of different layers. Neural networks in the DNN may be classified into three types: an input layer, a hidden layer, and an output layer. Usually, the first layer is the input layer, the last layer is the output layer, and layers in the middle are all hidden layers. Layers are fully connected. To be specific, any neuron at an $i^{th}$ layer is definitely connected to any neuron at an $(i+1)^{th}$ layer.

Although the DNN seems complex, work of each layer is not complex. Simply, an expression of a linear relationship is as follows: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha(\ )$ is an activation function. At each layer, such a simple operation is performed merely on the input vector $\vec{x}$ to obtain the output vector $\vec{y}$. Because there are a large quantity of layers in the DNN, there are also a large quantity of coefficients $W$ and offset vectors b. These parameters are defined in the DNN as follows: Using the coefficient W as an example, it is assumed that in a three-layer DNN, a linear coefficient from a fourth neuron at a second layer to a second neuron at a third layer is defined as $W_{24}^{3}$. A superscript 3 represents a number of a layer at which the coefficient W is located, and a subscript corresponds to an index 2 of the third layer for output and an index 4 of the second layer for input.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer has no parameter W. In the deep neural network, more hidden layers make the network more capable of describing a complex case in the real world. Theoretically, a model with a larger quantity of parameters indicates higher complexity and a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors W of many layers).

(4) Loss function

In a process of training a deep neural network, because it is expected that an output of the deep neural network maximally approximates a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the prediction value and the target value" needs to be predefined. This is a loss function or an objective function. The loss function and the objective function are important equations used to measure the difference between the predicted value and the target value. The loss function is used as an example. A higher output value (loss) of the loss function indicates a larger difference. Therefore, training of the deep neural network becomes a process of reducing the loss as much as possible.

(5) Back propagation algorithm

In a training process, a neural network may correct values of parameters in a neural network model by using an error back propagation (BP) algorithm, so that a reconstruction error loss of the neural network model becomes increasingly smaller. Specifically, an input signal is forward transferred until an error loss is generated in an output, and the parameter in the neural network model is updated through back propagation of information about the error loss, to converge the error loss. The back propagation algorithm is a back propagation motion mainly dependent on the error loss, and aims to obtain parameters of an optimal neural network model, for example, a weight matrix.

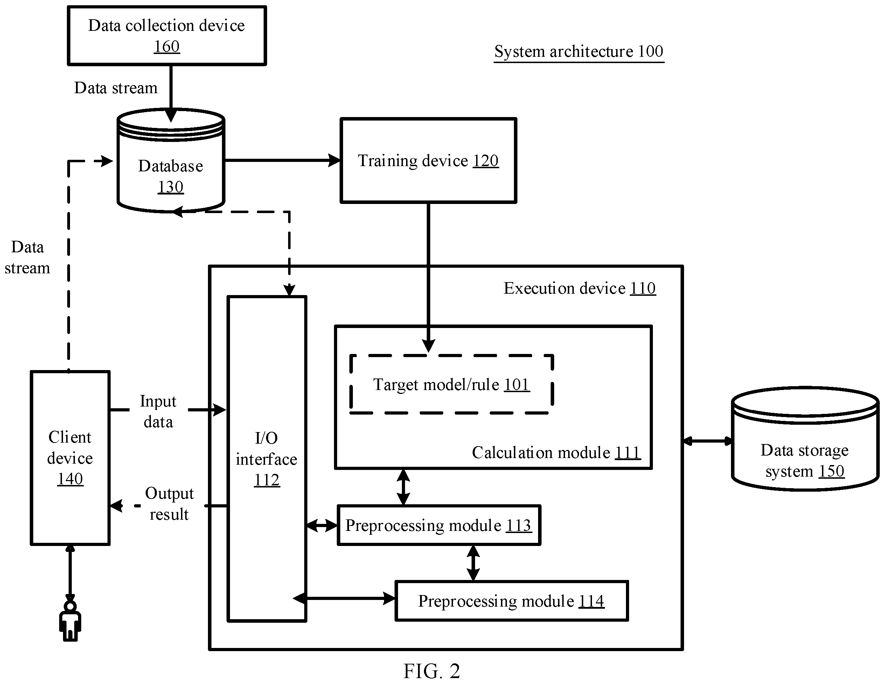

As shown in FIG. 2, an embodiment of this application provides a system architecture 100. The system architecture 100 includes an execution device 110, a training device 120, a database 130, a client device 140, a data storage system 150, and a data collection device 160.

In addition, the execution device 110 includes a computing module 111, an I/O interface 112, a preprocessing module 113, and a preprocessing module 114. The computing module 111 may include a target model/rule 101. The preprocessing module 113 and the preprocessing module 114 are optional.

In FIG. 2, the data collection device 160 is configured to collect training data. For the identity authentication method in the embodiments of this application, the training data may include operation behavior data of the user and an identity authentication result corresponding to the operation behavior data of the user. For example, the user includes an authenticated user or an unauthenticated user, and an identity authentication result corresponding to the operation behavior data of the user includes an authenticated user or an unauthenticated user.

After collecting the training data, the data collection device 160 stores the training data in the database 130. The training device 120 obtains the target model/rule 101 through training based on the training data maintained in the database 130.

The following describes the target model/rule 101 obtained by the training device 120 based on the training data. The training device 120 processes the input operation behavior data of the user, and compares an output identity authentication result with an identity authentication result corresponding to real operation behavior data of the user, until a difference between the identity authentication result output by the training device 120 and the identity authentication result corresponding to the real operation behavior data of the user is less than a specific threshold, thereby completing training of the target model/rule 101.

The target model/rule 101 can be used for identity authentication. The target model/rule 101 in this embodiment of this application may specifically include a neural network, an SVM, or the like.

It should be noted that, in actual application, the training data maintained in the database 130 is not necessarily all collected by the data collection device 160, or may be received from another device. In addition, it should be noted that the training device 120 does not necessarily train the target model/rule 101 completely based on the training data maintained in the database 130, or may obtain training data from a cloud or another place to perform model training. The foregoing description should not be construed as a limitation on this embodiment of this application.

The target model/rule 101 obtained through training by the training device 120 can be applied to different systems or devices, for example, applied to the execution device 110 shown in FIG. 2. The execution device 110 may be a terminal such as a mobile phone terminal, a tablet computer, a notebook computer, an augmented reality (AR) AR/virtual reality (VR), or a vehicle-mounted terminal, or may be a server, cloud, or the like. In FIG. 2, the execution device 110 is disposed with the input/output (I/O) interface 112, configured to exchange data with an external device. A user may input data to the I/O interface 112 through the client device 140. The input data in this embodiment of this application may include operation behavior data of the user input by the client device. The client device 140 herein may be specifically a terminal device.

The preprocessing module 113 and the preprocessing module 114 are configured to perform preprocessing based on the input data received by the I/O interface 112. For example, the preprocessing module 113 may be configured to extract feature data from the operation behavior data of the to-be-authenticated user. In this embodiment of this application, there may be no preprocessing module 113 or preprocessing module 114 (or there may be only one of the two preprocessing modules), and a calculation module 111 is directly used to process the input data.

In a related processing process such as a process in which the execution device 110 preprocesses the input data or the computing module 111 of the execution device 110 performs computing, the execution device 110 may invoke data, code, and the like in the data storage system 150 for corresponding processing, and may store, in the data storage system 150, data, instructions, and the like that are obtained through corresponding processing.

Finally, the I/O interface 112 returns a processing result, for example, the foregoing obtained identity authentication result, to the client device 140, to provide the processing result for the user.

In this embodiment of this application, the identity authentication result may include identity authentication success or identity authentication failure. The identity authentication success means that the to-be-authenticated user is an authenticated user, and the identity authentication failure means that the to-be-authenticated user is an unauthenticated user. For example, the identity authentication result may include unlocking success or unlocking failure. Alternatively, the identity authentication result may include login success or login failure. It should be understood that the foregoing is merely an example. In different application scenarios, a specific identity authentication result may include different forms. This is not limited in this embodiment of this application.

It should be noted that the training device 120 may generate corresponding target models/rules 101 for different purposes, or referred to as different tasks, based on different training data, and the corresponding target models/rules 101 may be used to implement the purposes or complete the tasks, to provide required results for users.

In a case shown in FIG. 2, the user may manually give input data, and the manual giving may be performed in an interface provided by the I/O interface 112. In another case, the client device 140 may automatically send input data to the I/O interface 112. If the client device 140 is required to automatically send the input data, the client device 140 needs to be authorized by the user, and the user may set a corresponding permission in the client device 140. The user may view, on the client device 140, the result output by the execution device 110. A specific presentation form may be a specific manner such as display, sound, or an action. The client device 140 may also be used as a data collection end to collect input data input to the I/O interface 112 and an output result output from the I/O interface 112 that are shown in the figure, use the input data and the output result as new sample data, and store the new sample data in the database 130. Certainly, the input data input to the I/O interface 112 and the output result output from the I/O interface 112 that are shown in the figure may alternatively be directly stored in the database 130 as new sample data by the I/O interface 112 without being collected by the client device 140.

It should be noted that FIG. 2 is merely a schematic diagram of the system architecture according to this embodiment of this application. A position relationship between a device, a component, a module, and the like shown in the figure constitutes no limitation. For example, in FIG. 2, the data storage system 150 is an external memory relative to the execution device 110. In another case, the data storage system 150 may alternatively be disposed in the execution device 110.

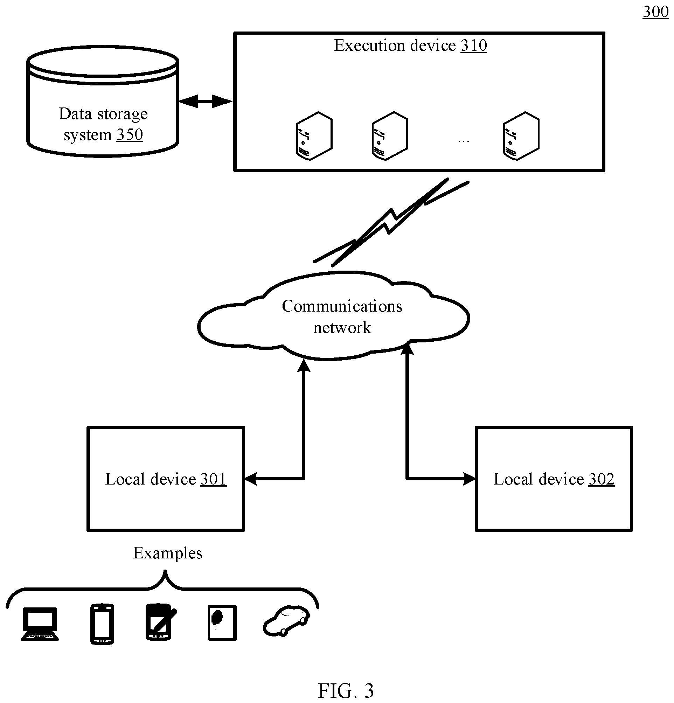

As shown in FIG. 3, an embodiment of this application provides a system architecture 300. The system architecture includes a local device 301, a local device 302, an execution device 310, and a data storage system 350. The local device 301 and the local device 302 are connected to the execution device 310 by using a communications network.

The execution device 310 may be implemented by one or more servers. Optionally, the execution device 310 may cooperate with another computing device, for example, a device such as a data memory, a router, or a load balancer. The execution device 310 may be disposed on one physical site, or distributed on a plurality of physical sites. The execution device 310 may implement an identity authentication method and a method for training an identity authentication model in the embodiments of this application by using data in the data storage system 350, or by invoking program code in the data storage system 350.

For example, the data storage system 350 may be deployed in the local device 301 or the local device 302. For example, the data storage system 350 may be configured to store a training sample.

Specifically, in an implementation, the execution device 310 may perform the following process:

obtaining second sample data, where the second sample data includes second operation behavior sample data and a label corresponding to the second operation behavior sample data, and the label corresponding to the second operation behavior sample data is used to indicate that a user corresponding to the second operation behavior sample data is an authenticated user or an unauthenticated user;

inputting the second operation behavior sample data in the second sample data into the first authentication model and the second authentication model to obtain a recognition result of the second operation behavior sample data, where a model parameter of the first authentication model is obtained by performing training based on first sample data, the first sample data includes first operation behavior sample data and a label corresponding to the first operation behavior sample data, the label corresponding to the first operation behavior sample data is used to indicate that a user corresponding to the first operation behavior sample data is an authenticated user or an unauthenticated user, a model parameter of the second authentication model is obtained by performing training based on fifth sample data, the fifth sample data includes fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user; and

performing training by using the recognition result of the second operation behavior sample data as an input of the decision fusion model and the label corresponding to the second operation behavior sample data as a target output of the decision fusion model, to obtain a trained decision fusion model.

By performing the foregoing process, the execution device 310 can obtain an identity authentication model, and the identity authentication model can improve accuracy of identity authentication.

A user may operate user equipment (for example, the local device 301 and the local device 302) of the user to interact with the execution device 310. Each local device may be any computing device, such as a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 310 through a communications network of any communications mechanism/communications standard. The communications network may be a wide area network, a local area network, a point-to-point connection, or any combination thereof.

In an implementation, the local device 301 and the local device 302 obtain related parameters of the identity authentication model from the execution device 310, deploy the identity authentication model on the local device 301 and the local device 302, and perform identity authentication by using the identity authentication model.

In another implementation, an identity authentication model may be directly deployed on the execution device 310, and the execution device 310 obtains a to-be-processed user behavior from the local device 301 and the local device 302, and performs identity authentication on the to-be-processed user behavior by using the identity authentication model.

Alternatively, the execution device 310 may be a cloud device. In this case, the execution device 310 may be deployed on a cloud. Alternatively, the execution device 310 may be a terminal device, and in this case, the execution device 310 may be deployed on a user terminal side. This is not limited in this embodiment of this application.

For example, the data storage system 350 may be deployed in the local device 301 or the local device 302. For example, the data storage system 350 may be configured to store a training sample.

For example, the data storage system 350 may be independent of the local device 301 or the local device 302, and is independently deployed on a storage device. The storage device may interact with the local device, obtain a user behavior log in the local device, and store the user behavior log in the storage device.

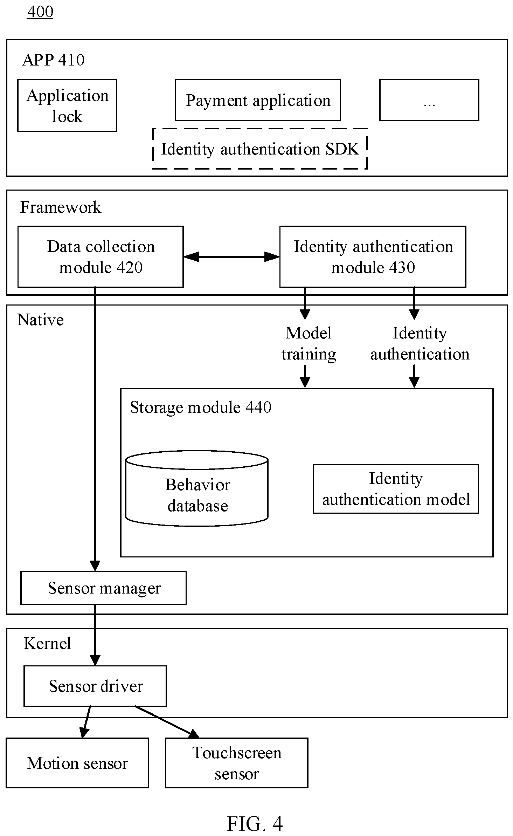

FIG. 4 is a schematic diagram of a system architecture according to an embodiment of this application. As shown in FIG. 4, the system 400 may include an APP 410, a data collection module 420, an identity authentication module 430, and a storage module 440.

An application layer includes a plurality of APPs 410. The APP 410 can request an identity authentication service in a specific scenario, for example, application lock unlocking or payment. In this way, implicit identity authentication can be implemented. The application lock unlocking may also be referred to as application unlocking, that is, an application is started after identity authentication.

For example, the APP 410 may be an APP integrating an identity authentication software development kit (SDK).

A framework layer provides the data collection module 420 and the identity authentication module 430 that can be used by an upper-layer APP.

The data collection module 420 is configured to listen to data of a sensor. For example, the sensor includes an ambient light sensor, a health sensor, a sound sensor, a touchscreen sensor, and a motion sensor. The motion sensor is a sensor that can listen to a movement status of a device in real time and can be embedded in the device, such as an accelerometer, a gyroscope, or a magnetometer. The sound sensor may include a microphone, a speaker, or the like.

Specifically, the data collection module may listen to data of the sensor by using a sensor manager at a native layer.

The sensor manager is a general manager of sensor events, and is configured to read events, distribute the events, and the like. For example, the sensor manager can create a listener to listen to an event of a sensor.

Specifically, the sensor manager interacts with the sensor by using a sensor driver in a kernel.

The identity authentication module 430 is configured to authenticate an identity. For example, the identity authentication module 430 performs the identity authentication method in the embodiments of this application to implement identity authentication. Further, the identity authentication module 430 is further configured to perform model training of the identity authentication model. For example, the identity authentication module 430 performs the method for training an identity authentication model in the embodiments of this application, to obtain the trained identity authentication model. It should be understood that model training of the identity authentication model completed by the identity authentication module 430 in FIG. 4 is merely an example. Alternatively, model training of the identity authentication model may be completed by another device. The trained identity authentication model may be stored in the storage module 440.

The storage module 440 is configured to store the operation behavior data of the user and the identity authentication model, to implement secure storage. As shown in FIG. 4, the operation behavior data of the user may be stored in an operation behavior database.

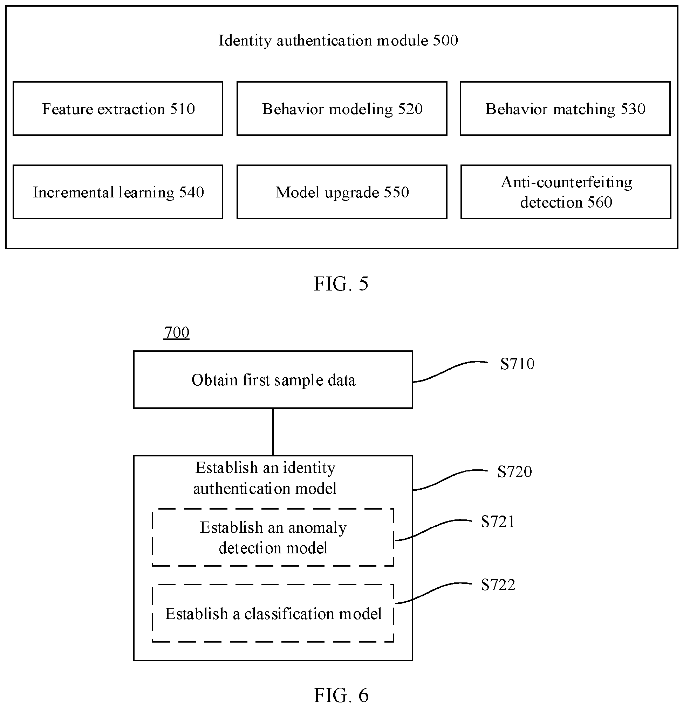

FIG. 5 is a schematic block diagram of an identity authentication module 500 according to an embodiment of this application. FIG. 5 may be used as an example of the identity authentication module 430 in FIG. 4. The identity authentication module 500 can implement functions such as feature extraction 510, behavior modeling 520, behavior matching 530, incremental learning 540, model upgrade 550, and anti-counterfeiting detection 560.

As shown in FIG. 5, the identity authentication module 500 may be configured to implement the feature extraction 510. For example, feature data is extracted from raw data, and the feature data may be input into an identity authentication model to implement identity authentication. The raw data is raw data collected by the sensor. Further, the feature extraction further includes another preprocessing operation on the feature data, for example, removing invalid feature data from the extracted feature data.

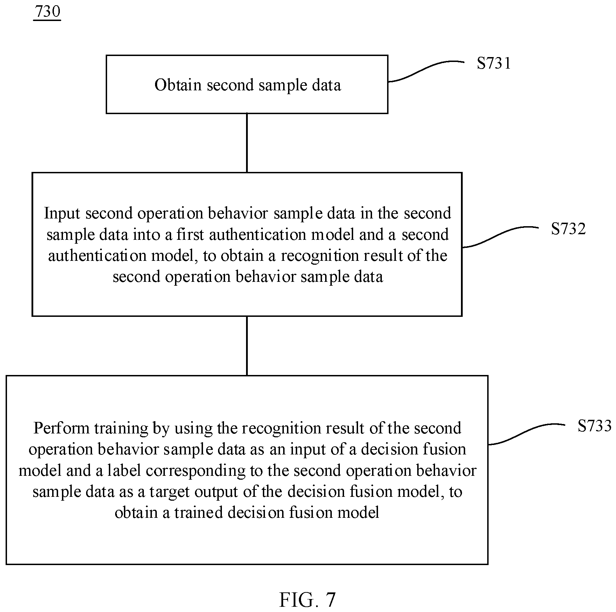

Optionally, the identity authentication module 500 may establish an identity authentication model based on the feature data, or implement model training of the identity authentication model based on the feature data, that is, behavior modeling 520 in FIG. 5. For example, the identity authentication module 500 may perform a method 700 in FIG. 6 or a method 730 in FIG. 7 to train the identity authentication model.

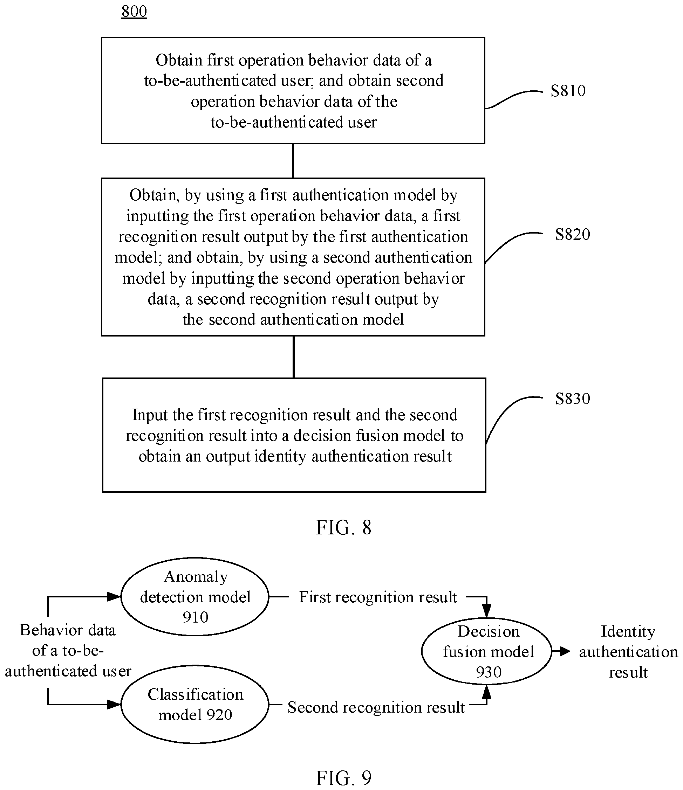

The identity authentication module 500 may be used for identity authentication or behavior matching 530. Specifically, the feature data is input into the identity authentication model to implement identity authentication. For example, the identity authentication module 500 may perform a method 800 in FIG. 8 to implement identity authentication. It should be understood that, the identity authentication model may be obtained through training by the identity authentication module 500, that is, the identity authentication module 500 may be configured to perform modeling to obtain an identity authentication model, and then implement identity authentication by using the identity authentication model. Alternatively, the identity authentication module 500 may also implement identity authentication by using an identity authentication model obtained through training by another device.

Because a behavior of a user may change with time, operation behavior data of the user is unstable.

Optionally, the identity authentication module 500 may be further used for incremental learning 540.

Incremental learning means that a learning system can continuously learn new knowledge from a new sample and store most of previously learned knowledge.

Specifically, after the trained identity authentication model is obtained, the identity authentication module 500 may continuously collect the operation behavior data of the user, that is, new operation behavior data of the user, and on a basis of an original database, the identity authentication model is updated through incremental learning only for a change caused by the new operation behavior data of the user.

Incremental learning can continuously optimize the identity authentication model, adapt to a changing user behavior, and enhance a recognition capability.

Optionally, the identity authentication module 500 may be further configured to implement model upgrade 550, and specifically configured to upgrade a structure of the identity authentication model, implement interaction with a cloud server, and the like.

For example, the identity authentication module 500 may obtain a structural parameter of the upgraded identity authentication model, to update the structural parameter of the original identity authentication model, that is, upgrade the structure of the identity authentication model. The structural parameter of the identity authentication model may be manually set.

Further, the identity authentication module 500 may train the upgraded identity authentication model. For example, feature data is extracted from the raw data, and the upgraded identity authentication model is trained based on the feature data.

Further, the identity authentication module 500 interacts with the cloud server, and specifically, may send the structural parameter of the upgraded identity authentication model to the cloud server.

Optionally, the identity authentication module 500 may be further configured to implement anti-counterfeiting detection 560, and specifically configured to verify legality of the identity authentication module 500, and the like, for example, ensure that the identity authentication model is not tampered with, and implement secure storage.

FIG. 6 shows a method 700 for training an identity authentication model according to an embodiment of this application. The method 700 includes step S710 and step S720. The method 700 may be performed by the training device 120 in FIG. 2. The training device may be a cloud service device, or may be a mobile terminal, for example, a device that can be used to train an identity authentication model, such as a computer or a server.

The following describes step S710 and step S720 in detail.

S710. Obtain first sample data. The first sample data includes first operation behavior sample data and a label corresponding to the first operation behavior sample data, and the label corresponding to the first operation behavior sample data is used to indicate that a user corresponding to the first operation behavior sample data is an authenticated user or an unauthenticated user.

Optionally, step S710 further includes: obtaining fifth sample data. The fifth sample data includes fifth operation behavior sample data and a label corresponding to the fifth operation behavior sample data, and the label corresponding to the fifth operation behavior sample data is used to indicate that a user corresponding to the fifth operation behavior sample data is an authenticated user or an unauthenticated user.

The authenticated user may also be considered as an owner, and the unauthenticated user may also be considered as an attacker. Data of the authenticated user may be referred to as a positive sample, and data of the unauthenticated user may be referred to as a negative sample.

For example, the operation behavior sample data of the authenticated user is a positive sample, and the operation behavior sample data of the unauthenticated user is a negative sample.

The first sample data may be determined based on raw data collected by a sensor. For example, the sensor includes a touchscreen sensor and/or a motion sensor. Alternatively, the first sample data may include preset data.

For example, the positive sample may be determined based on the raw data collected by the sensor, and the negative sample may be preset data.

For example, collecting data by a sensor may include: registering a touchscreen sensor and/or a motion sensor for listening when a screen is unlocked; and deregistering the touchscreen sensor and/or the motion sensor for listening when the screen is locked.

The raw data collected by the touchscreen sensor includes a time stamp, an x/y-axis coordinate of a touch point, a touch area, touch pressure, an action, a screen orientation, and the like.

The raw data collected by the motion sensor includes a time stamp, acceleration x/y/z-axis data, gyroscope x/y/z-axis data, and the like.

It should be understood that the foregoing is merely an example, and the data collected by the sensor may include any one or more items of the foregoing, or may include other data.

The action refers to a touch event. For example, when a touch behavior is pressing and lifting, the touch event is a "tap" operation of the user. When the touch behavior is "pressing, sliding, and lifting", the touch event is a "slide" operation of the user. A screen orientation includes landscape or portrait.

Specifically, the feature data may be extracted from the raw data to obtain the first sample data.

Optionally, the first operation behavior sample data includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

For example, the first operation behavior sample data may include correlation values of any one or more of the foregoing features. The correlation values may include: a start value, an end value, a mean value, a standard deviation, a 20% quantile, a 50% quantile, and an 80% quantile. For example, the first sample data may include a start value and an end value of the x/y-axis coordinate of the touch point, a start value, an end value, a mean value, a standard deviation, a 20% quantile, a 50% quantile, and an 80% quantile of the touch area, and a mean value and a standard deviation of the acceleration x/y/z-axis data.

A manner of defining the start value and the end value may be preset. For example, the data collected by the sensor includes n touch points. A start value of the touch speed is a speed between a first touch point and a second touch point. An end value of the touch speed is a speed between an $(n-1)^{th}$ touch point and an $n^{th}$ touch point.

Optionally, before the feature data is extracted from the raw data, the raw data may be preprocessed, so that valid operation behavior data is screened out. Then the feature data is extracted from the valid operation behavior data to obtain the first operation behavior sample data. The valid operation behavior data is data collected when a valid touchscreen behavior occurs, and a manner of defining the valid operation behavior data may be set based on a requirement. For example, if the quantity of touch points of the user is greater than a preset threshold, a touch behavior is valid, and operation behavior data with the quantity of touch points of the user being greater than the preset threshold is obtained through screening from the raw data and is used as the valid operation behavior data.

One touch point represents one touch event. That the quantity of touch points is greater than the preset threshold means that the touch event exceeds a preset threshold.

In this way, abnormal operation behavior data of the user can be removed, and accuracy of a training sample is improved.

It should be understood that the explanation, description, extension, and the like of the first sample data in this embodiment of this application are also applicable to the fifth sample data, and the fifth sample data is not described in detail again in this embodiment of this application.

S720. Establish an identity authentication model.

Optionally, before step S720, whether to start establishing the identity authentication model may be determined.

For example, when a time period for collecting the first sample data exceeds preset duration and/or a data amount of the first sample data exceeds a preset amount, the identity authentication model starts to be established. As described above, the first sample data may include operation behavior data of the user collected by using the sensor, and a time period for collecting the first sample data may include a time period for collecting by the sensor.

Alternatively, when a time period for collecting a positive sample in the first sample data exceeds preset duration and/or a data amount of a positive sample exceeds a preset amount, the identity authentication model starts to be established. For example, the preset duration is one week, and the preset amount is 2000. If the authenticated user uses the device for more than one week, that is, a time period for collecting the positive sample exceeds one week, and there are more than 2000 valid touch behaviors, that is, the valid operation behavior data exceeds 2000, the anomaly detection model starts to be established.

When data collection of the authenticated user meets certain duration and the amount of data reaches a certain amount, the sample data can reflect a habit of the authenticated user more truthfully. By setting a start condition of model establishment, an identity authentication model more compliant with the habit of the user can be obtained, and accuracy of identity authentication can be improved.

The identity authentication model includes at least two authentication models. The first authentication model may be trained based on the first sample data, and the second authentication model may be trained based on the fifth sample data.

Optionally, the first authentication model and the second authentication model are an anomaly detection model and a classification model respectively.

The following uses an example in which the first authentication model is the anomaly detection model and the second authentication model is the classification model to describe a method for training the identity authentication model.

Specifically, step S720 includes step S721 and step S722.

S721. Establish the anomaly detection model.

The anomaly detection model is trained based on the first sample data.

The anomaly detection model is used to detect abnormal data, and determine the authenticated user and the unauthenticated user by detecting the data of the unauthenticated user.

For example, the anomaly detection model may use a one-class SVM or an isolation forest. It should be understood that an algorithm used in the anomaly detection model is not limited in this embodiment of this application.

Optionally, step S721 includes setting a parameter of the anomaly detection model, for example, a data anomaly rate.

Because the authenticated user may generate an abnormal behavior consciously or unconsciously, setting the data abnormality rate can ensure detection accuracy of the authenticated user. For example, if the data abnormality rate is set to 0.1, theoretically, it can be ensured that a recognition rate of the authenticated user is at least 90%.

Feature discrimination affects a recognition capability of the anomaly detection model. In the process of training the anomaly detection model, poor feature discrimination causes an increase of "similar behaviors". In other words, different operation behavior data is recognized as same operation behavior data, and an overall behavior recognition capability is reduced consequently.

Optionally, step S721 includes selecting an optimal feature combination.

Specifically, the optimal feature combination may be selected by feature engineering.

For example, several features are selected each time. For example, several features are selected from the features in step S710 to obtain a feature combination, and the feature combination is input into the anomaly detection model to obtain a feature combination corresponding to the anomaly detection model with highest accuracy, and the feature combination is used as an optimal feature combination.

It should be understood that the foregoing is merely an example, and a specific feature selection manner is not limited in this embodiment of this application.

Optionally, before the anomaly detection model is trained, preprocessing may be performed on the first data sample, for example, standardization processing is performed on the first data sample.

S722. Establish the classification model.

The classification model is trained based on the fifth sample data.

It should be noted that the fifth sample data includes a plurality of pieces of sample data. The sample data used to train the anomaly detection model and the sample data used to train the classification model may be the same or different.

The classification model may be a two-class classification model, and the authenticated user and the unauthenticated user are determined through classification.

For example, the classification model may be an SVM or a neural network. It should be understood that an algorithm used in the classification model is not limited in this embodiment of this application.

Optionally, step S722 includes determining an optimal hyperparameter of the classification model.

For example, the optimal hyperparameter of the classification model can be determined by using a grid method. Specifically, the hyperparameter of the classification model is selected each time, accuracy of the classification model is tested, and a hyperparameter corresponding to a classification model with highest accuracy is used as the optimal hyperparameter.

It should be understood that the foregoing is merely an example, and a manner of determining the optimal hyperparameter is not limited in this embodiment of this application.

Step S722 includes classifying unauthenticated users into N types, and determining a type of unauthenticated user to which the operation behavior data belongs. For example, N = 10.

Theoretically, if a known behavior of a two-class classification model includes a behavior of the authenticated user and behaviors of N types of unauthenticated users, that is, N+1 types of behaviors, a probability that a behavior of an unauthenticated user is falsely recognized as an authenticated user is 1/(N+1). Increasing the types of unauthenticated users can effectively reduce a false acceptance rate (FAR), but increase a false rejection rate (FRR). A decrease of the false acceptance rate can improve an anti-attack capability, while an increase of the false rejection rate leads to a decrease of the recognition rate of the authenticated user. When the decrease of the FAR is less than the increase of the FRR, the overall recognition capability decreases.

Optionally, before the classification model is trained, preprocessing may be performed on the first sample data. For example, standardization processing is performed on the first sample data.

It should be understood that step S721 and step S722 are performed in any sequence. For example, step S721 and step S722 may be performed simultaneously. Alternatively, step S721 is performed first, and then step S722 is performed. Alternatively, step S722 is performed first, and then step S721 is performed.

The trained anomaly detection model and the trained classification model may be obtained based on step S721 and step S722.

When identity authentication is performed, the recognition results of the anomaly detection model and the classification model can be input into the decision fusion model, and a fusion result is used as the identity authentication result. The recognition result in this embodiment of this application may include that the input operation behavior data is recognized as an authenticated user or an unauthenticated user. Specifically, the recognition result may include a probability that the input operation behavior data is recognized as an authenticated user or a probability that the input operation behavior data is recognized as an unauthenticated user.

Optionally, the decision fusion model is used to perform, based on weights corresponding to the at least two authentication models, weighting calculation on recognition results output by the at least two authentication models, and determine the identity authentication result based on a result obtained through the weighting calculation.

A model parameter of the decision fusion model, for example, weights corresponding to the two authentication models, may be preset. Alternatively, the weights may be obtained through training.

Optionally, the method 700 further includes establishing the decision fusion model. FIG. 7 is a schematic flowchart of a method 730 for training a decision fusion model according to an embodiment of this application. The identity authentication model in this embodiment of this application includes at least two authentication models and a decision fusion model, and training of the decision fusion model is also training of the identity authentication model. The method for training the decision fusion model may also be understood as a method for training the identity authentication model. The method 730 includes steps S731 to S733.

S731. Obtain second sample data.

The second sample data includes second operation behavior sample data and a label corresponding to the second operation behavior sample data, and the label corresponding to the second operation behavior sample data is used to indicate that a user corresponding to the second operation behavior sample data is an authenticated user or an unauthenticated user.

S732. Input the second operation behavior sample data in the second sample data into the first authentication model and the second authentication model, to obtain a recognition result of the second operation behavior sample data.

Optionally, the recognition result of the second operation behavior sample data includes a recognition result output by the first authentication model and a recognition result output by the second authentication model.

The recognition result output by the first authentication model includes a matching score corresponding to the second operation behavior sample data and output by the first authentication model and/or a matching result corresponding to the second operation behavior sample output by the first authentication model; and the recognition result output by the second authentication model includes: a matching score corresponding to the second operation behavior sample data and output by the second authentication model and/or a matching result corresponding to the second operation behavior sample data and output by the second authentication model.

The matching score corresponding to the second operation behavior sample data is used to indicate a probability that the user corresponding to the second operation behavior sample data is recognized as an authenticated user, the matching result corresponding to the second operation behavior sample data is used to indicate that the user corresponding to the second operation behavior sample data is recognized as an authenticated user or an unauthenticated user, and the matching result corresponding to the second operation behavior sample data includes at least two matching results determined based on at least two thresholds and the matching score corresponding to the second operation behavior sample data.

Specifically, the second operation behavior sample data is input into the authentication model, and a matching score may be obtained, and it may be determined, based on the matching score and the at least two thresholds, that the user corresponding to the second operation behavior sample data is recognized as an authenticated user or an unauthenticated user.

The at least two thresholds may be set based on a requirement.

For example, the at least two thresholds may be determined based on accuracy of recognition results corresponding to the second operation behavior sample data and output by the two authentication models.

For example, the at least two thresholds may include a first threshold and a second threshold. The first threshold is greater than the second threshold. The matching result obtained based on the first threshold may be referred to as a matching result corresponding to the first threshold. The matching result obtained based on the second threshold may be referred to as a matching result corresponding to the second threshold. Confidence of the matching result corresponding to the first threshold is higher.

When the matching score is greater than or equal to the first threshold, the user corresponding to the second operation behavior sample data is recognized as an authenticated user; or when the matching score is less than the first threshold, the user corresponding to the second operation behavior sample data is recognized as an unauthenticated user.

When the matching score is greater than or equal to the second threshold, the user corresponding to the second operation behavior sample data is recognized as an authenticated user; or when the matching score is less than the second threshold, the user corresponding to the second operation behavior sample data is recognized as an unauthenticated user.

For example, the second threshold may be a default threshold. For example, a value range of the matching score is [0, 1], and the second threshold is 0.5. When the matching score is greater than or equal to 0.5, the user corresponding to the second operation behavior sample data is recognized as an authenticated user; or when the matching score is less than 0.5, the user corresponding to the second operation behavior sample data is recognized as an unauthenticated user.

The following uses the anomaly detection model and the classification model as an example to describe the recognition result of the second operation behavior sample data.

The recognition result of the second operation behavior sample data includes: a recognition result that is of the second operation behavior sample data and is output by the anomaly detection model and a recognition result that is of the second operation behavior sample data and is output by the classification model.

The recognition result that is of the second operation behavior sample data and is output by the anomaly detection model includes: a matching score A corresponding to the second operation behavior sample data and output by the anomaly detection model and a matching result A corresponding to the second operation behavior sample data.

For example, the at least two thresholds include a first threshold A and a second threshold A, and the first threshold A is greater than the second threshold A. The matching result A corresponding to the second operation behavior sample data and output by the anomaly detection model includes a matching result determined based on the first threshold A and a matching result determined based on the second threshold A. When the matching score A is greater than or equal to the first threshold A, the matching result determined based on the first threshold A is an authenticated user; or when the matching score A is less than the first threshold A, the matching result determined based on the first threshold A is an unauthenticated user. When the matching score A is greater than or equal to the second threshold A, the matching result determined based on the second threshold A is an authenticated user; or when the matching score A is less than the second threshold A, the matching result determined based on the second threshold A is an unauthenticated user.

The recognition result output by the classification model includes a matching score B corresponding to the second operation behavior sample data and output by the classification model and a matching result B corresponding to the second operation behavior sample data.

For example, the at least two thresholds include a first threshold B and a second threshold B, and the first threshold B is greater than the second threshold B. The matching result B corresponding to the second operation behavior sample data and output by the classification model includes a matching result determined based on the first threshold B and a matching result determined based on the second threshold B. When the matching score B is greater than or equal to the first threshold B, the matching result determined based on the first threshold B is an authenticated user; or when the matching score B is less than the first threshold B, the matching result determined based on the first threshold B is an unauthenticated user. When the matching score B is greater than or equal to the second threshold B, the matching result determined based on the second threshold B is an authenticated user; or when the matching score B is less than the second threshold B, the matching result determined based on the second threshold B is an unauthenticated user.

The first threshold A and the first threshold B may be different or the same. The second threshold A and the second threshold B may be the same or different.

Optionally, sample data in a test sample set is input into the trained authentication model, and a matching score corresponding to the sample data is obtained. A plurality of candidate matching results corresponding to a plurality of candidate thresholds are obtained based on the plurality of candidate thresholds. A candidate threshold corresponding to a candidate matching result that meets a preset condition in the plurality of candidate matching results is determined as the first threshold.

Specifically, the first threshold of the first authentication model may be determined by performing the following steps:

(1) Obtain fourth sample data, where the fourth sample data includes fourth operation behavior sample data and a label corresponding to the fourth operation behavior sample data. The label corresponding to the fourth operation behavior sample data is used to indicate that a user corresponding to the fourth operation behavior sample data is an authenticated user or an unauthenticated user.

(2) Input the fourth operation behavior sample data into the first authentication model to obtain a matching score that is of the fourth operation behavior sample data and output by the first authentication model, where the matching score of the fourth operation behavior sample data is used to indicate a probability that the user corresponding to the fourth operation behavior sample data is recognized as an authenticated user.

(3) Determine, based on a plurality of candidate thresholds, a plurality of candidate matching results corresponding to the matching score of the fourth operation behavior sample data, where the plurality of candidate matching results include that the user corresponding to the fourth operation behavior sample data is recognized as an authenticated user or an unauthenticated user.

(4) Determine a candidate threshold corresponding to a candidate matching result that meets a preset condition in the plurality of candidate matching results, as the first threshold.

It should be noted that the first threshold of the second authentication model may also be determined in the foregoing manner, and details are not described herein again.

The following uses the anomaly detection model and the classification model as an example to describe a method for determining the first threshold. For ease of description, the first threshold corresponding to the anomaly detection model is referred to as the first threshold A, and the fourth operation behavior sample data used to determine the first threshold A is referred to as the fourth operation behavior sample data A. A first threshold corresponding to the classification model is referred to as a first threshold B, and fourth operation behavior sample data used to determine the first threshold B is referred to as fourth operation behavior sample data B.

Anomaly detection model

As described above, parameters of the anomaly detection model include a data anomaly rate. Because the authenticated user may generate an abnormal behavior consciously or unconsciously, adjusting the data abnormality rate can improve detection accuracy of the authenticated user.

In step S720, the data abnormality rate may be set to 0.5, and then the anomaly detection model is trained.

The fourth operation behavior sample data A is input into the trained anomaly detection model, to obtain a matching score A corresponding to the fourth operation behavior sample data A. A plurality of candidate matching results A corresponding to the plurality of candidate thresholds are obtained based on the plurality of candidate thresholds. A candidate threshold whose accuracy is higher than 90% in the plurality of candidate matching results A is used as the first threshold A.

Classification model

The fourth operation behavior sample data B is input into the trained classification model, to obtain a matching score B corresponding to the fourth operation behavior sample data B. A plurality of candidate matching results B corresponding to the plurality of candidate thresholds are obtained based on the plurality of candidate thresholds. A candidate threshold whose FAR meets a preset condition in the plurality of candidate matching results B is used as the first threshold A.

A first threshold meeting a preset condition is determined from the candidate thresholds, and different performance of the authentication model can be adjusted by using different first thresholds, so that performance of the authentication model reaches an expectation. For example, an anti-attack capability and an owner recognition rate of the model can be adjusted by using different thresholds, so as to achieve a balance.

In this embodiment of this application, the recognition results output by the two authentication models include a matching score and at least two matching results. Different from an existing authentication model that can provide only one recognition result, this solution can provide more features for the decision fusion model. In this way, a better decision fusion model is trained, authentication accuracy of the decision fusion model is improved, and accuracy of identity authentication is improved.

S733. Train the decision fusion model by using the recognition result of the second operation behavior sample data as an input of the decision fusion model and the label corresponding to the second operation behavior sample data as a target output of the decision fusion model, to obtain a trained decision fusion model.

For example, the decision fusion model may be an SVM

It should be noted that the foregoing descriptions, limitations, extensions, and the like of the first sample data are also applicable to the second sample data. The first sample data and the second sample data may be the same or different.

The following uses the anomaly detection model and the classification model as an example for description.

The second operation behavior sample data is input into the anomaly detection model, and a first recognition result is output; and the second operation behavior sample data is input into the classification model, and a second recognition result is output. The first recognition result and the second recognition result are input into the decision fusion model, and the label corresponding to the second operation behavior sample data is used as the target output of the decision fusion model to train the decision fusion model, to obtain a trained decision fusion model.

For example, recognition results of the anomaly detection model and the classification model may be a matching score, that is, a probability that the user corresponding to the second operation behavior sample data is recognized as an authenticated user. A higher matching score indicates a higher probability that the user corresponding to the second operation behavior sample data is recognized as an authenticated user.

For example, inputting the first recognition result and the second recognition result into the decision fusion model to obtain an identity authentication result includes: performing weighting calculation based on weights corresponding to the first recognition result and the second recognition result to obtain a weighting result, and obtaining an identity authentication result based on the weighting result. For example, when the weighting result is greater than or equal to a set threshold A, authentication succeeds, that is, the user corresponding to the second operation behavior sample data is recognized as an authenticated user; or when the weighting result is less than a set threshold A, authentication fails, that is, the user corresponding to the second operation behavior sample data is recognized as an unauthenticated user. Alternatively, when the weighting result is greater than a set threshold A, authentication succeeds, that is, the user corresponding to the second operation behavior sample data is recognized as an authenticated user; or when the weighting result is less than or equal to a set threshold A, authentication fails, that is, the user corresponding to the second operation behavior sample data is recognized as an unauthenticated user. Alternatively, when the weighting result is greater than a set threshold A, authentication succeeds, that is, the user corresponding to the second operation behavior sample data is recognized as an authenticated user; when the weighting result is less than a set threshold B, authentication fails, that is, the user corresponding to the second operation behavior sample data is recognized as an unauthenticated user; or when the weighting result is greater than a set threshold B and less than a set threshold A, the user cannot be recognized. In the foregoing solution, the decision fusion model is trained. Training the decision fusion model includes training weights corresponding to at least two authentication models. To be specific, weights corresponding to recognition results of the anomaly detection model and the classification model are trained to obtain an optimal weight proportion.

Optionally, step S733 further includes: performing feature extraction on the matching score corresponding to the second operation behavior sample data, to obtain a score feature; and performing training by using the score feature and the recognition result of the second operation behavior sample data as an input of the decision fusion model and the label corresponding to the second operation behavior sample data as a target output of the decision fusion model.

For example, performing feature extraction on the matching score of the second sample data includes: performing a mathematical operation, for example, an addition, subtraction, multiplication, or division operation, on the score, and using an operation result as a score feature.

The following uses the anomaly detection model and the classification model as an example to describe step S733.

(1) Input the second operation behavior sample data into the anomaly detection model and the classification model respectively, to obtain recognition results output by the anomaly detection model and the classification model respectively.

The recognition result output by the anomaly detection model includes a matching score A corresponding to the second operation behavior sample data and output by the anomaly detection model and a matching result A corresponding to the second operation behavior sample data. The matching result A includes a matching result corresponding to the first threshold A and a matching result corresponding to the second threshold A.

The recognition result output by the classification model includes a matching score B corresponding to the second operation behavior sample data and output by the classification model and a matching result B corresponding to the second operation behavior sample data. The matching result B includes a matching result corresponding to the first threshold B and a matching result corresponding to the second threshold B.

(2) Perform addition, subtraction, multiplication, and division operations on the matching score corresponding to the anomaly detection model and the matching score corresponding to the classification model respectively to obtain four operation results, which are used as four score features.

The matching score corresponding to the anomaly detection model and the matching score corresponding to the classification model are used as two score features.

For example, training is performed by using some or all of the four score features and the recognition results output by the anomaly detection model and the classification model as an input of the decision fusion model and the label corresponding to the second operation behavior sample data as a target output of the decision fusion model. In this embodiment of this application, feature extraction is performed on the matching score, to further provide more features for the decision fusion model. In this way, a better decision fusion model is trained, authentication accuracy of the decision fusion model is improved, and accuracy of identity authentication is improved.

Optionally, step S720 further includes:

(1) Obtain third sample data, where the third sample data includes third operation behavior sample data.

(2) Input the third operation behavior sample data into the first authentication model to obtain a recognition result that is of the third operation behavior sample data and is output by the first authentication model.

The third operation behavior sample data is input into the second authentication model to obtain a recognition result that is of the third operation behavior sample data and is output by the second authentication model.

(3) Input the recognition result that is of the third operation behavior sample data and is output by the first authentication model and the recognition result that is of the third operation behavior sample data and is output by the second authentication model, into the trained decision fusion model to obtain an identity authentication result corresponding to the third operation behavior sample data.

(4) Train the first authentication model and/or the second authentication model based on the third operation behavior sample data and the identity authentication result corresponding to the third operation behavior sample data.

It should be noted that the foregoing descriptions, limitations, extensions, and the like of the first sample data are also applicable to the third sample data. The third sample data and the first sample data may be the same or different. The third sample data and the second sample data may be the same or different.

In the process of obtaining sample data, incorrect data may be introduced due to a conscious or unconscious behavior of the user, and consequently, an error is caused in a label corresponding to the sample data. For example, when operation behavior data of a user is collected by using the sensor, if an authenticated user has an abnormal behavior, after the abnormal operation behavior data is collected, a corresponding sample label is the authenticated user, and an authentication model obtained through training based on the sample data and the corresponding label has a problem that accuracy is not high. However, accuracy of the identity authentication result obtained by using the trained decision fusion model is relatively high, and the authentication model is trained again by using an output of the authentication model to implement feedback. Therefore, accuracy of the authentication model can be further improved, and accuracy of the identity authentication model is further improved.

The following uses the identity authentication model including the anomaly detection model and the classification model as an example for description.

The third operation behavior sample data is input into the anomaly detection model, and a first recognition result is output; and the third operation behavior sample data is input into the classification model, and a second recognition result is output. The first recognition result and the second recognition result are input into the trained decision fusion model, to obtain an identity authentication result corresponding to the third operation behavior sample data.

At least the anomaly detection model and the classification model are trained based on the third operation behavior sample data and the identity authentication result corresponding to the third operation behavior sample data.

For example, the first operation behavior sample data and the third operation behavior sample data may include same sample data, and training the anomaly detection model and the classification model based on the third operation behavior sample data and the identity authentication result corresponding to the third operation behavior sample data includes:

screening the first sample data based on the label corresponding to the first operation behavior sample data and the identity authentication result corresponding to the third operation behavior sample data, and training the anomaly detection model and the classification model based on the screened first sample data.

Specifically, sample data whose label is different from the identity authentication result corresponding to the third operation behavior sample data may be removed from the first sample data.

For example, sample data A is one piece of sample data in the first operation behavior sample data and the third operation behavior sample data. In the first operation behavior sample data, a label corresponding to the sample data A is an unauthenticated user. The sample data A is input into the identity authentication model, and an obtained identity authentication result is an authenticated user. In this case, the sample data A may be removed from the first sample data, and the anomaly detection model and the classification model are trained based on the screened first sample data.

In this way, incorrect sample data can be removed, so that accuracy of the sample data is improved, and continuous learning of past data is implemented. Therefore, accuracy of the authentication model is improved, and overall accuracy of the identity authentication model is improved.

For example, training the anomaly detection model and the classification model based on the third operation behavior sample data and the identity authentication result corresponding to the third operation behavior sample data includes:

training the anomaly detection model based on the third operation behavior sample data; and
training the classification model by using the third operation behavior sample data as an input of the classification model and the identity authentication result corresponding to the third operation behavior sample data as a target output of the classification model.

In this way, the data amount of the training sample may be expanded. For example, when the third operation behavior sample data does not have a corresponding label, the authentication model may also be trained by using the identity authentication result corresponding to the third operation behavior sample data as the label corresponding to the third operation behavior sample data. Therefore, accuracy of the authentication model is improved, and overall accuracy of the identity authentication model is improved.

Optionally, the method 700 further includes updating the identity authentication model through incremental learning.

Incremental learning means that a learning system can continuously learn new knowledge from a new sample and store most of previously learned knowledge.

Specifically, after the trained identity authentication model is obtained by using the method 730, the operation behavior data of the user, that is, new operation behavior data of the user, may be continuously collected, and on a basis of an original database, the identity authentication model is updated through incremental learning only for a change caused by the new operation behavior data of the user.

Incremental learning can continuously optimize the identity authentication model, adapt to a changing user behavior, and enhance the recognition capability.

In this embodiment of this application, recognition results of at least two authentication models are input into the decision fusion model for decision fusion, to obtain an identity authentication result. By training the decision fusion model, accuracy of identity authentication can be improved. In addition, operation behavior data of the user is used for identity authentication, and a use habit of the user is not changed. In this way, implicit authentication is implemented.

In addition, the identity authentication model is obtained by combining the anomaly detection model and the classification model. On one hand, the recognition rate of the authenticated user is improved by using the anomaly detection model. On the other hand, the anti-attack capability is improved by using the classification model, and a recognition capability of the identity authentication model is improved on the whole.

In addition, both the anomaly detection model and the classification model may use a small-scale algorithm. For example, the anomaly detection model may use a one-class SVM, the classification model may use a two-class SVM, and this can be implemented only by introducing a libsvm library. In this way, in an identity authentication process, algorithm overheads are low, and additional hardware support is not required. The identity authentication model can be trained on a user terminal side. Therefore, secure data storage is implemented on the user terminal side, and a privacy security problem caused by uploading to a cloud is avoided.

FIG. 8 shows an identity authentication method 800 according to an embodiment of this application. The method 800 includes steps S810 to S830. The method 800 may be performed by an apparatus or a device capable of performing identity authentication. The method may be performed by a terminal device, a computer, a server, or the like, for example, the execution device 110 in FIG. 2. Step S810 to step S830 are described below.

An identity authentication model used in the identity authentication method 800 in FIG. 8 may be constructed by using the method in FIG. 6 or FIG. 7. To avoid unnecessary repetition, the following appropriately omits repeated descriptions when the method 800 is described.

S810. Obtain first operation behavior data of a to-be-authenticated user; and obtain second operation behavior data of the to-be-authenticated user.

The operation behavior data of the to-be-authenticated user may include data collected by using a sensor.

The sensor includes a motion sensor and/or a touchscreen sensor.

The operation behavior data of the to-be-authenticated user may be data obtained after raw data collected by the sensor is processed.

For example, the raw data collected by the touchscreen sensor includes a time stamp, an x/y-axis coordinate of a touch point, a touch area, touch pressure, an action, a screen orientation, and the like. The data collected by the motion sensor includes a time stamp, acceleration x/y/z-axis data, gyroscope x/y/z-axis data, and the like. It should be understood that the foregoing is merely an example, and the data collected by the sensor may include any one or more items of the foregoing, or may include other data.

Optionally, the operation behavior data of the to-be-authenticated user includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

S820. Obtain, by using a first authentication model by inputting the first operation behavior data, a first recognition result output by the first authentication model; and obtain, by using a second authentication model by inputting the second operation behavior data, a second recognition result output by the second authentication model.

The first authentication model and the second authentication model are an anomaly detection model and a classification model respectively.

Model parameters of the two authentication models are respectively obtained by performing training based on first sample data and fifth sample data. For a specific training process, refer to the foregoing method 700.

Optionally, the model parameters of the two authentication models are obtained by performing training based on the first sample data, the fifth sample data, and third sample data, and the third sample data includes third operation behavior data. For a specific training process, refer to the foregoing method 700.

For a training process of the anomaly detection model and the classification model, refer to the foregoing method 700.

The anomaly detection model is used to detect abnormal data, and determine an authenticated user and an unauthenticated user by detecting data of the unauthenticated user. The classification model may be a two-class classification model, and the authenticated user and the unauthenticated user are determined through classification.

S830. Input the first recognition result and the second recognition result into a decision fusion model to obtain an output identity authentication result, where the decision fusion model is used to determine the identity authentication result based on weight parameters of the first recognition result and the second recognition result.

For example, as shown in FIG. 9, the first operation behavior data is input into the anomaly detection model 910, and the first recognition result is output. The second operation behavior data is input into the classification model 920, and the second recognition result is output. The first recognition result and the second recognition result are input into the decision fusion model 930, and the identity authentication result is obtained. The recognition result includes that the to-be-authenticated user is an authenticated user or that the to-be-authenticated user is an unauthenticated user.

For example, if the recognition results of the anomaly detection model and the classification model are both an authenticated user, the identity authentication result is an authenticated user. If the recognition results of the anomaly detection model and the classification model are both an unauthenticated user, the identity authentication result is an unauthenticated user. If one of the recognition results of the anomaly detection model and the classification model is an authenticated user and the other is an unauthenticated user, the identity authentication result is that the user cannot be recognized.

For another example, if one of the recognition results of the anomaly detection model and the classification model is an authenticated user, the identity authentication result is an authenticated user. If the recognition results of the anomaly detection model and the classification model are both an unauthenticated user, the identity authentication result is an unauthenticated user.

For another example, if one of the recognition results of the anomaly detection model and the classification model is an unauthenticated user, the identity authentication result is an unauthenticated user. If the recognition results of the anomaly detection model and the classification model are both an authenticated user, the identity authentication result is an authenticated user.

Optionally, the decision fusion model is used to perform, based on weights corresponding to the at least two authentication models, weighting calculation on recognition results output by the at least two authentication models, and determine an identity authentication result based on a result obtained through the weighting calculation.

By setting a corresponding weight for the authentication model, weighting calculation is performed on the recognition result, and a weight value can be adjusted based on a requirement. Therefore, accuracy of identity authentication is further improved.

Optionally, a weight parameter of the decision fusion model is obtained by inputting second operation behavior sample data in second sample data into the first authentication model and the second authentication model to obtain a recognition result that is of the second operation behavior sample data and is output by the first authentication model and the second authentication model, and performing training by using the recognition result of the second operation behavior sample data as an input of the decision fusion model and a label corresponding to the second operation behavior sample data as a target output of the decision fusion model, the second sample data includes the second operation behavior sample data and the label corresponding to the second operation behavior sample data, and the label corresponding to the second operation behavior sample data is used to indicate that a user corresponding to the second operation behavior sample data is an authenticated user or an unauthenticated user. For a specific training process, refer to the foregoing method 730.

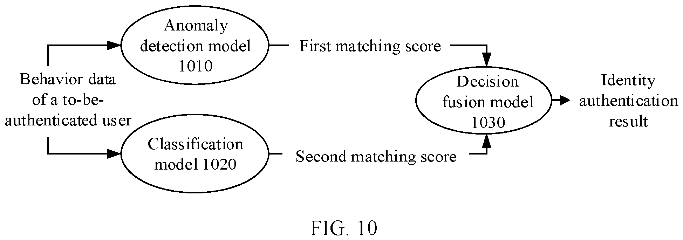

For example, as shown in FIG. 10, the operation behavior data of the to-be-authenticated user is input into the anomaly detection model 1010, and a first matching score is output. The operation behavior data of the to-be-authenticated user is input into the classification model 1020, and a second matching score is output. The first matching score and the second matching score are input into the decision fusion model 1030, weighting calculation is performed based on weight pairs corresponding to the at least two authentication models, and an identity authentication result is determined based on a result obtained through the weighting calculation. The matching score in FIG. 10 is a recognition result output by the authentication model, that is, a probability that the to-be-authenticated user is an authenticated user.

For example, when the result of the weighting calculation is greater than or equal to a set threshold A, authentication succeeds, that is, the to-be-authenticated user is recognized as an authenticated user; or when the result of the weighting calculation is less than a set threshold A, authentication fails, that is, the to-be-authenticated user is recognized as an unauthenticated user. Alternatively, when the result of the weighting calculation is greater than a set threshold A, authentication succeeds, that is, the to-be-authenticated user is recognized as an authenticated user; or when the result of the weighting calculation is less than or equal to a set threshold A, authentication fails, that is, the to-be-authenticated user is recognized as an unauthenticated user. Alternatively, when the result of the weighting calculation is greater than a set threshold A, authentication succeeds, that is, the to-be-authenticated user is recognized as an authenticated user; when the result of the weighting calculation is less than a set threshold B, authentication fails, that is, the to-be-authenticated user is recognized as an unauthenticated user; or when the result of the weighting calculation is greater than a set threshold B and less than a set threshold A, the to-be-authenticated user cannot be recognized.

Optionally, the first recognition result includes a matching score corresponding to the first operation behavior data and/or a matching result corresponding to the first operation behavior data; the second recognition result includes a matching score corresponding to the second operation behavior data and/or a matching result corresponding to the second operation behavior data;

the matching score corresponding to the first operation behavior data is used to indicate a probability that the to-be-authenticated user is recognized as an authenticated user, the matching result corresponding to the first operation behavior data is used to indicate that the to-be-authenticated user is recognized as an authenticated user or an unauthenticated user, and the matching result corresponding to the first operation behavior data includes at least two matching results determined based on at least two thresholds and the matching score corresponding to the first operation behavior data; and the matching score corresponding to the second operation behavior data is used to indicate a probability that the to-be-authenticated user is recognized as an authenticated user, the matching result corresponding to the second operation behavior data is used to indicate that the to-be-authenticated user is recognized as an authenticated user or an unauthenticated user, and the matching result corresponding to the second operation behavior data includes at least two matching results determined based on at least two thresholds and the matching score corresponding to the second operation behavior data.

The following uses the recognition result output by the anomaly detection model and the recognition result output by the classification model as an example for description.

The recognition result output by the anomaly detection model includes a matching score A corresponding to the operation behavior data of the to-be-authenticated user and output by the anomaly detection model and a matching result A corresponding to the first operation behavior data.

For example, the at least two thresholds include a first threshold A and a second threshold A, and the first threshold A is greater than the second threshold A. The matching result A corresponding to the first operation behavior data and output by the anomaly detection model includes a matching result determined based on the first threshold A and a matching result determined based on the second threshold A. When the matching score A is greater than or equal to the first threshold A, the matching result determined based on the first threshold A is an authenticated user; or when the matching score A is less than the first threshold A, the matching result determined based on the first threshold A is an unauthenticated user. When the matching score A is greater than or equal to the second threshold A, the matching result determined based on the second threshold A is an authenticated user; or when the matching score A is less than the second threshold A, the matching result determined based on the second threshold A is an unauthenticated user.

The recognition result output by the classification model includes a matching score B corresponding to the second operation behavior data and output by the classification model and a matching result B corresponding to the second operation behavior data.

For example, the at least two thresholds include a first threshold B and a second threshold B, and the first threshold B is greater than the second threshold B. The matching result B corresponding to the second operation behavior data and output by the classification model includes a matching result determined based on the first threshold B and a matching result determined based on the second threshold B. When the matching score B is greater than or equal to the first threshold B, the matching result determined based on the first threshold B is an authenticated user; or when the matching score B is less than the first threshold B, the matching result determined based on the first threshold B is an unauthenticated user. When the matching score B is greater than or equal to the second threshold B, the matching result determined based on the second threshold B is an authenticated user; or when the matching score B is less than the second threshold B, the matching result determined based on the second threshold B is an unauthenticated user.

In this embodiment of this application, the recognition results output by the two authentication models include a matching score and at least two matching results, and different performance of the authentication model can be adjusted by using different thresholds, so that performance of the authentication model can reach an expectation. For example, an anti-attack capability and an owner recognition rate of the model are adjusted by using different thresholds, so that performance of the authentication model can be balanced. In addition, different from an existing authentication model that can only provide one recognition result, this solution can provide more features for the decision fusion model. In this way, authentication accuracy of the decision fusion model is improved, and accuracy of identity authentication is improved.

Optionally, the inputting the first recognition result and the second recognition result into a decision fusion model to obtain an output identity authentication result includes: obtaining a first score feature based on the matching score corresponding to the first operation behavior data; obtaining a second score feature based on the matching score corresponding to the second operation behavior data; and inputting the first score feature, the second score feature, the first recognition result, and the second recognition result into the decision fusion model to obtain the output identity authentication result.

For example, performing feature extraction on the matching score corresponding to the operation behavior data of the to-be-authenticated user includes: performing a mathematical operation, for example, an addition, subtraction, multiplication, or division operation, on the score, and using an operation result as a score feature.

The following uses the anomaly detection model and the classification model as an example to describe step S830.

(1) Input the operation behavior data of the to-be-authenticated user into the anomaly detection model and the classification model respectively, to obtain recognition results output by the anomaly detection model and the classification model respectively.

The recognition result output by the anomaly detection model includes a matching score A corresponding to the first operation behavior data and output by the anomaly detection model and a matching result A corresponding to the first operation behavior data. The matching result A includes a matching result corresponding to the first threshold A and a matching result corresponding to the second threshold A.

The recognition result output by the classification model includes a matching score B corresponding to the second operation behavior data and output by the classification model and a matching result B corresponding to the second operation behavior data. The matching result B includes a matching result corresponding to the first threshold B and a matching result corresponding to the second threshold B.

(2) Perform addition, subtraction, multiplication, and division operations on the matching score corresponding to the anomaly detection model and the matching score corresponding to the classification model respectively to obtain four operation results, which are used as four score features.

The matching score corresponding to the anomaly detection model and the matching score corresponding to the classification model are used as two score features.

For example, recognition results output by the anomaly detection model and the classification model and some or all of the four score features may be input into the decision fusion model to obtain the identity authentication result.

In this embodiment of this application, feature extraction is performed on the matching score, to further provide more features for the decision fusion model. In this way, authentication accuracy of the decision fusion model is improved, and accuracy of identity authentication is improved.

In this embodiment of this application, a better model parameter is obtained by training the decision fusion model. For example, a better weight proportion of the authentication model is obtained. Therefore, accuracy of identity authentication is further improved.

Optionally, the method 800 further includes: inputting s pieces of operation behavior data of the to-be-authenticated user into the identity authentication model, to obtain s identity authentication results; and obtaining a final identity authentication result based on the s identity authentication results.

For example, in the s identity authentication results, if a quantity of successful authentication times exceeds a quantity of failed authentication times, authentication succeeds, that is, the to-be-authenticated user is recognized as an authenticated user; if a quantity of successful authentication times is less than a quantity of failed authentication times, authentication fails, that is, the to-be-authenticated user is recognized as an unauthenticated user; or if a quantity of successful authentication times is equal to a quantity of failed authentication times, the to-be-authenticated user cannot be recognized. Alternatively, the s identity authentication results may be s weighting results. An average value of the s weighting results is calculated, and a final identity authentication result is determined based on the average value. In this way, accuracy of the authentication result is further improved.

Table 1 shows simulation results of identity authentication using different algorithms. It can be learned from Table 1 that the identity authentication method provided in this embodiment of this application can improve accuracy of identity authentication.

**Table 1**

| Algorithm | Anti-attack rate | Owner recognition rate |
|---|---|---|
| One-class SVM algorithm | 73.38% | 84.87% |
| Two-class SVM algorithm | 92.13% | 86.13% |
| Identity authentication method of this application | 90.19% | 91.77% |

In this embodiment of this application, recognition results of at least two authentication models are input into the decision fusion model for decision fusion, to obtain an identity authentication result. In this way, accuracy of identity authentication can be improved. In addition, operation behavior data of the user is used for identity authentication, and a use habit of the user is not changed. In this way, implicit authentication is implemented.

In addition, the anomaly detection model and the classification model are used. On one hand, a recognition rate of an authenticated user is improved by using the anomaly detection model. On the other hand, an anti-attack capability is improved by using the classification model, and a recognition capability of the identity authentication model is improved on the whole.

In addition, both the anomaly detection model and the classification model may use a small-scale algorithm. For example, the anomaly detection model may use a one-class SVM, the classification model may use a two-class SVM, and this can be implemented only by introducing a libsvm library. In this way, in an identity authentication process, algorithm overheads are low, and additional hardware support is not required. The identity authentication model can be trained on a user terminal side. Therefore, secure data storage is implemented on the user terminal side, and a privacy security problem caused by uploading to a cloud is avoided.

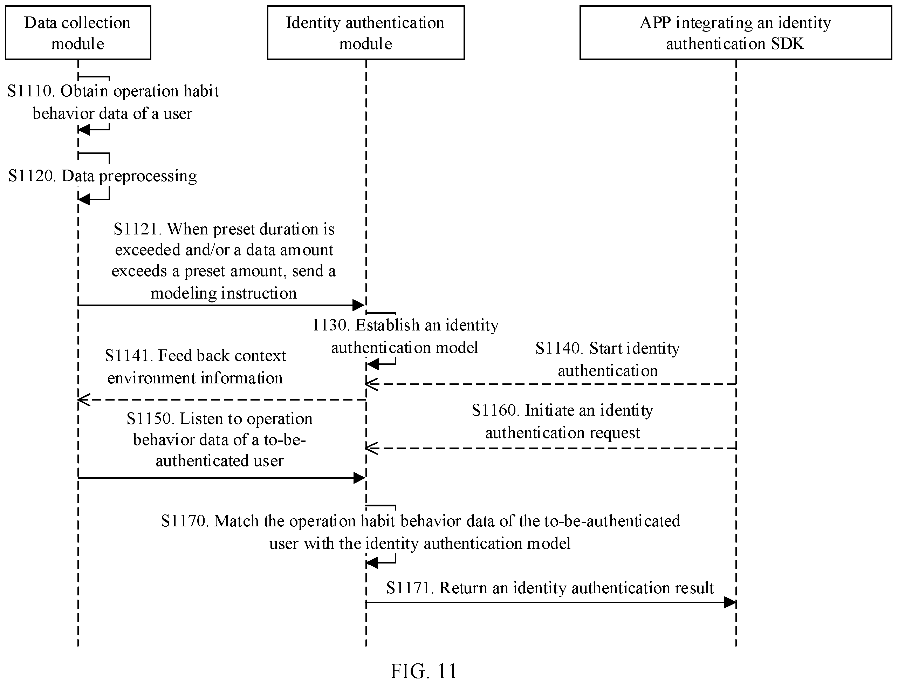

FIG. 11 is a schematic flowchart of an identity authentication method and a method for training an identity authentication model according to an embodiment of this application. The following uses a scenario shown in FIG. 11 as an example to describe an application procedure of the identity authentication method and the method for training an identity authentication model in this embodiment of this application.

As shown in FIG. 11, an identity authentication process may include two phases: a training phase and an authentication phase.

The training phase is a process of generating an identity authentication model based on operation behavior data of a user. The authentication phase is a process of verifying matching between operation behavior data of the to-be-authenticated user and the identity authentication model, and finally providing an identity authentication result. The following describes steps of the two phases respectively.

Training phase

S1110. A data collection module obtains operation behavior data of a user. The operation behavior data may also be referred to as operation habit behavior data.

Specifically, the data collection module registers a listener of a sensor, and collects operation behavior data of the user by using the sensor. The data collection module may be the data collection module 420 in FIG. 4.

For example, the sensor includes a touchscreen sensor and/or a motion sensor.

For example, the data collected by the touchscreen sensor includes a time stamp, an x/y-axis coordinate of a touch point, a touch area, touch pressure, an action, a screen orientation, and the like.

The data collected by the motion sensor includes a time stamp, acceleration x/y/z-axis data, gyroscope x/y/z-axis data, and the like.

It should be understood that the foregoing is merely an example, and the data collected by the sensor may include any one or more items of the foregoing, or may include other data.

For example, the listener of the sensor may be registered when the screen is unlocked; and the listener of the sensor is deregistered when the screen is locked.

S1120. Perform data preprocessing on the operation behavior data collected by the sensor, to obtain a first training sample.

For example, the preprocessing includes: removing abnormal data, screening valid operation behavior data, or extracting feature data, to obtain the first training sample. The first training sample may be stored in the storage module 440 shown in FIG. 4.

For example, the data obtained after the preprocessing may be used as a positive sample in the first training sample, and the preset operation behavior data of the unauthenticated user may be used as a negative sample in the first training sample.

It should be understood that step (A2) performed by the data collection module in FIG. 11 is used only as an example. Optionally, step (A2) may be performed by an identity authentication module.

S1130. The identity authentication module trains the identity authentication model. The identity authentication module may be the identity authentication module 430 in FIG. 4. This step corresponds to S720 in the method 700.

Optionally, before the identity authentication model starts to be trained, the identity authentication module may further determine whether to start training the identity authentication model.

For example, when a time period for collecting first sample data exceeds preset duration and/or a data amount of the first sample data exceeds a preset amount, the identity authentication model starts to be established.

Alternatively, if step (A2) is performed by the data collection module, the data collection module may determine whether to start training the identity authentication model. For example, as shown in step S1121 in FIG. 11, when the time period for collecting first sample data exceeds preset duration and/or a data amount of the first sample data exceeds a preset amount, a modeling instruction is sent to the identity authentication module, to instruct the identity authentication module to start training the identity authentication model.

Specifically, the method for training an identity authentication model may be the method for training an identity authentication model in the embodiments of this application.

Behaviors of the user in different application scenarios may be different. Therefore, identity authentication models may be separately established for different application scenarios.

S1130 further includes verifying validity of the identity authentication model.

If an indicator of the identity authentication model meets a preset indicator, the identity authentication model is valid, the modeling phase is ended, and a trained identity authentication model is obtained. For example, a modeling completion status may be marked.

A validity verification manner of the identity authentication model may be set based on an application scenario. In other words, in different application scenarios, validity of the identity authentication model may be verified in different manners.

For example, when the identity authentication model is applied to screen unlocking, if the indicator of the identity authentication model meets the preset indicator, an anti-attack capability of the identity authentication model meets a requirement.

The trained identity authentication model may be stored in the storage module 440 in FIG. 4. There may be one or more identity authentication models stored in the storage module 440.

Authentication phase

S1140. Start an identity authentication function.

For example, the identity authentication model may be applied to identity authentication in an application program. For example, as shown in FIG. 11, the APP may be an APP integrated with an identity authentication SDK. The APP may be the APP 410 in FIG. 4.

For example, when the identity authentication model is applied to application lock unlocking, when the to-be-authenticated user needs to use the APP, the identity authentication model may be instructed to start identity authentication. The APP may be referred to as a to-be-authenticated APP.

Further, the APP may prompt the user that the operation behavior data of the user needs to be obtained. If the user agrees, identity authentication is started.

Further, the identity authentication module may instruct the data collection module to listen to data of the sensor. Specifically, as shown in step S1141 in FIG. 11, the identity authentication module may feed back context environment information to the data collection module. The context environment information is used to indicate an application environment. For example, as shown in FIG. 11, the context environment information includes a type of the to-be-authenticated APP, for example, payment or news. Alternatively, the context information may further include information such as a time or a location.

S1150. The data collection module listens to the operation behavior data of the to-be-authenticated user that is collected by the sensor.

As described above, different identity authentication models may be obtained by training different operation behavior data. In this case, the data of the sensor listened to by the data collection module is the operation behavior data of the user corresponding to the application scenario. As shown in FIG. 11, the data collection module listens to the operation behavior data of the user corresponding to the to-be-authenticated APP.

The data collection module may determine, based on the context environment information, the operation behavior data of the user that needs to be collected.

For example, for different to-be-authenticated APPs, the identity authentication model may perform identity authentication by using different user operation behavior data.

Alternatively, for a same to-be-authenticated APP, identity authentication may be performed by using different user operation behavior data when the identity authentication model is applied to application lock unlocking and the identity authentication model is applied to payment.

For example, for a same to-be-authenticated APP, when the identity authentication model is applied to the application lock unlocking, the data collection module listens to user operation behavior data 1, and inputs the user operation behavior data 1 into the identity authentication model. When the identity authentication model is applied to payment, the data collection module listens to user operation behavior data 2, and inputs the user operation behavior data 2 into the identity authentication model. Parameters of the user operation behavior data 1 may be less than parameters of the user operation behavior data 2. For example, the user operation behavior data 1 may include data collected by the touchscreen sensor. The user operation behavior data 2 may include data collected by a touchscreen sensor and a motion sensor. In this way, different data is listened to for different application scenarios, so that identity authentication can be implemented, and system security is further ensured.

S1160. Initiate an identity authentication request.

For example, the identity authentication model may be applied to identity authentication in an application program. The to-be-authenticated APP may initiate an identity authentication request, for example, initiate an identity authentication request to the identity authentication module 430 in FIG. 4.

S1170. Match operation behavior data of the to-be-authenticated user.

The operation behavior data of the to-be-authenticated user is determined based on the data of the sensor listened to by the data collection module in step (B2).

Specifically, the operation behavior data of the to-be-authenticated user is input into the identity authentication model, to recognize whether the user is an authenticated user. Further, as shown in step S1171 in FIG. 11, a recognition result is fed back to the to-be-authenticated application program.

The identity authentication method in this embodiment of this application may be used to match the operation behavior data of the to-be-authenticated user. For example, the identity authentication method may be the method 800 in FIG. 8.

In this embodiment of this application, recognition results of at least two authentication models are input into the decision fusion model for decision fusion, to obtain an identity authentication result. In this way, accuracy of identity authentication can be improved. In addition, operation behavior data of the user is used for identity authentication, and a use habit of the user is not changed. In this way, implicit authentication is implemented.

The identity authentication method provided in this embodiment of this application may be applied to continuous identity authentication. When a user wakes up an intelligent terminal, identity authentication may be performed on the to-be-authenticated user that instructs to wake up the intelligent terminal; and when the intelligent terminal is in a woken state, that is, an unlocked state, identity authentication may be performed on the to-be-authenticated user again after the to-be-authenticated user delivers an instruction or after a preset time interval. Therefore, if the user leaves after waking up the intelligent terminal, a security problem such as privacy data leakage of the user in the intelligent terminal due to use of the intelligent terminal by any user in contact with the intelligent terminal can be effectively avoided. Alternatively, when the user logs in to an APP, identity authentication may be performed on the to-be-authenticated user who logs in to the APP. When the user is in a login state, identity authentication may be performed again on the to-be-authenticated user after the to-be-authenticated user delivers an instruction or after a preset time interval. Therefore, if the user leaves after logging in to the APP, a security problem such as privacy data leakage of the user in the intelligent terminal due to use of the APP by any user in contact with the intelligent terminal can be effectively avoided.

The identity authentication method provided in this embodiment of this application may be combined with another identity authentication method.

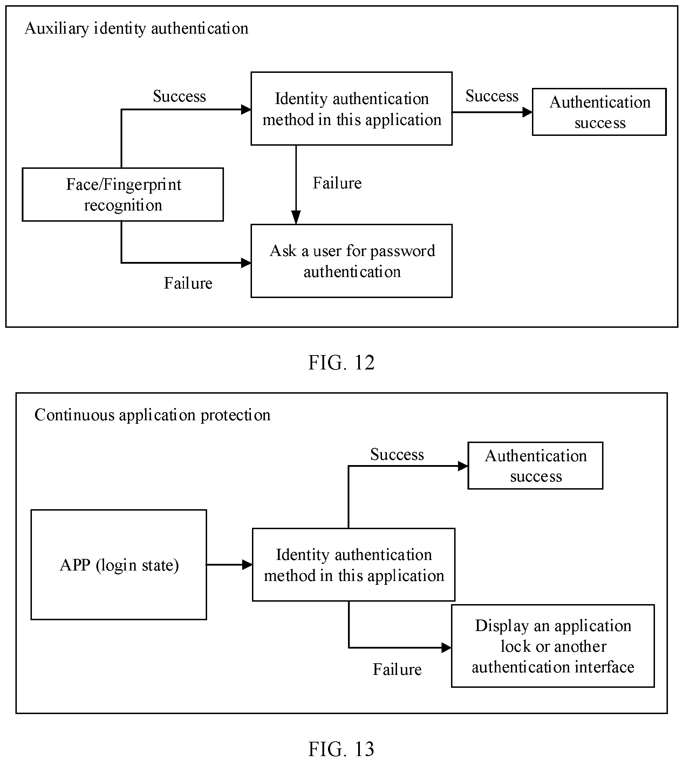

For example, the identity authentication method provided in this embodiment of this application is used as an auxiliary authentication method, and identity authentication is performed in combination with another authentication method, thereby improving security and reliability of the system. For example, as shown in FIG. 12, first identity authentication is performed by using face recognition or fingerprint recognition. If the first identity authentication succeeds, second identity authentication is performed by using the identity authentication method provided in this embodiment of this application. If the second identity authentication succeeds, the authentication succeeds. If authentication failure occurs once, the user is prompted to perform password authentication.

For example, the identity authentication method provided in this embodiment of this application is used as a continuous protection method, and identity authentication is performed in combination with another authentication method, thereby improving security and reliability of the system. For example, as shown in FIG. 13, when the user logs in to the APP, identity authentication is performed on the to-be-authenticated user who logs in to the APP. When the user is in the login state, the identity authentication method provided in this application may be used to perform identity authentication on the to-be-authenticated user again after the to-be-authenticated user delivers an instruction or after a preset time interval. If the authentication fails, an application lock or another authentication interface is displayed. Therefore, if the user leaves after logging in to the APP, a security problem such as privacy data leakage of the user in the intelligent terminal due to use of the APP by any user in contact with the intelligent terminal can be effectively avoided. In the identity authentication method provided in this embodiment of this application, a behavior authentication method is used, to implement implicit authentication.

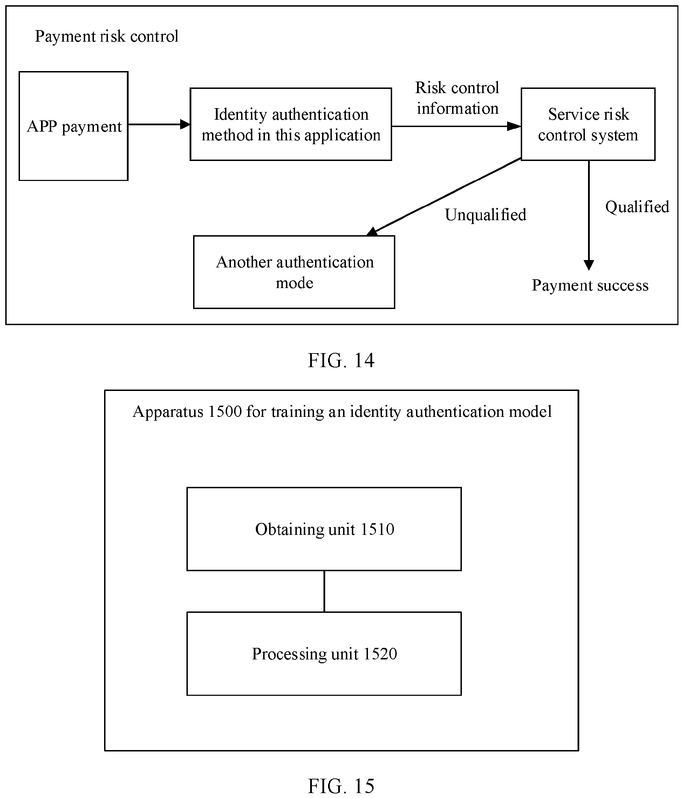

For example, the identity authentication method provided in this embodiment of this application is used for payment risk control, and identity authentication is performed in combination with another authentication method, thereby improving security and reliability of the system. For example, as shown in FIG. 14, when the user performs payment, identity authentication is performed by using the identity authentication method provided in this embodiment of this application, and an identity authentication result is input into a service risk control system as behavior risk control information, to perform risk control. If the risk control is qualified, a payment operation is performed. If the risk control is unqualified, the user is prompted to use other modes for identity authentication.

The following describes in detail a training apparatus and an identity authentication apparatus in the embodiments of this application with reference to the accompanying drawings. It should be understood that an apparatus for training an identity authentication model described below can perform the method for training an identity authentication model in the foregoing embodiments of this application. The identity authentication apparatus may perform the identity authentication method in the foregoing embodiments of this application. To avoid unnecessary repetition, repeated descriptions are appropriately omitted when the identity authentication apparatus and the apparatus for training an identity authentication model in the embodiments of this application are described below.

FIG. 15 is a schematic block diagram according to an embodiment of this application. As shown in FIG. 15, the apparatus 1500 for training an identity authentication model includes an obtaining unit 1510 and a processing unit 1520. The identity authentication model includes a first authentication model, a second authentication model, and a decision fusion model, the first authentication model and the second authentication model are an anomaly detection model and a classification model respectively.

The obtaining unit 1510 and the processing unit 1520 may be configured to perform the method for training an identity authentication model in the embodiments of this application. Specifically, the obtaining unit 1510 may perform the foregoing step S731, and the processing unit 1520 may perform the foregoing steps S732 and S733.

The obtaining unit 1510 is configured to obtain second sample data, where the second sample data includes second operation behavior sample data and a label corresponding to the second operation behavior sample data, and the label corresponding to the second operation behavior sample data is used to indicate that a user corresponding to the second operation behavior sample data is an authenticated user or an unauthenticated user. The processing unit 1520 is configured to: input the second operation behavior sample data in the second sample data into the first authentication model and the second authentication model to obtain a recognition result of the second operation behavior data, where a model parameter of the first authentication model is obtained by performing training based on first sample data, the first sample data includes first operation behavior sample data and a label corresponding to the first operation behavior sample data, the label corresponding to the first operation behavior sample data is used to indicate that a user corresponding to the first operation behavior sample data is an authenticated user or an unauthenticated user, a model parameter of the second authentication model is obtained by performing training based on fifth sample data, the fifth sample data includes fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user; and perform training by using the recognition result of the second operation behavior sample data as an input of the decision fusion model and the label corresponding to the second operation behavior sample data as a target output of the decision fusion model, to obtain a trained decision fusion model.

Optionally, in an embodiment, the recognition result of the second operation behavior sample data includes a recognition result output by the first authentication model and a recognition result output by the second authentication model; the recognition result output by the first authentication model includes a matching score corresponding to the second operation behavior sample data and output by the first authentication model and/or a matching result corresponding to the second operation behavior sample and output by the first authentication model; the recognition result output by the second authentication model includes a matching score corresponding to the second operation behavior sample data and output by the second authentication model and/or a matching result corresponding to the second operation behavior sample data and output by the second authentication model; and the matching score corresponding to the second operation behavior sample data is used to indicate a probability that the user corresponding to the second operation behavior sample data is recognized as an authenticated user, the matching result corresponding to the second operation behavior sample data is used to indicate that the user corresponding to the second operation behavior sample data is recognized as an authenticated user or an unauthenticated user, and the matching result corresponding to the second operation behavior sample data includes at least two matching results determined based on at least two thresholds and the matching score corresponding to the second operation behavior sample data.

Optionally, in an embodiment, the at least two thresholds include a first threshold; and the obtaining unit 1510 is further configured to obtain fourth sample data, where the fourth sample data includes fourth operation behavior sample data and a label corresponding to the fourth operation behavior sample data, and the label corresponding to the fourth operation behavior sample data is used to indicate that a user corresponding to the fourth operation behavior sample data is an authenticated user or an unauthenticated user. The processing unit 1520 is further configured to: input the fourth operation behavior sample data into the first authentication model to obtain a matching score corresponding to the fourth operation behavior sample data and output by the first authentication model, where the matching score corresponding to the fourth operation behavior sample data is used to indicate a probability that the user corresponding to the fourth operation behavior sample data is recognized as an authenticated user; determine, based on a plurality of candidate thresholds, a plurality of candidate matching results corresponding to the matching score corresponding to the fourth operation behavior sample data, where the plurality of candidate matching results are used to indicate that the user corresponding to the fourth operation behavior sample data is recognized as an authenticated user or an unauthenticated user; and determine a candidate threshold corresponding to a candidate matching result whose accuracy meets a preset condition in the plurality of candidate matching results, as the first threshold.

Optionally, in an embodiment, the processing unit 1520 is specifically configured to: obtain a first score feature of the second operation behavior sample data based on the matching score corresponding to the second operation behavior sample data and output by the first authentication model; obtain a second score feature of the second operation behavior sample data based on the matching score corresponding to the second operation behavior sample data and output by the second authentication model; and perform training by using the first score feature of the second operation behavior sample data, the second score feature of the second operation behavior sample data, and the recognition result of the second operation behavior sample data as an input of the decision fusion model, and using the label corresponding to the second operation behavior sample data as a target output of the decision fusion model.

Optionally, in an embodiment, the second operation behavior sample data includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

Optionally, in an embodiment, the second sample data is obtained by performing screening based on sliding duration of the user on a touchscreen and/or a quantity of touch points of the user on the touchscreen.

Optionally, in an embodiment, the obtaining unit 1510 is further configured to obtain third sample data, where the third sample data includes third operation behavior sample data. The processing unit 1520 is further configured to: input the third operation behavior sample data into the first authentication model to obtain a recognition result that is of the third operation behavior sample data and is output by the first authentication model; input the third operation behavior sample data into the second authentication model to obtain a recognition result that is of the third operation behavior sample data and is output by the second authentication model; input the recognition result that is of the third operation behavior sample data and is output by the first authentication model and the recognition result that is of the third operation behavior sample data and is output by the second authentication model, into the trained decision fusion model to obtain an identity authentication result corresponding to the third operation behavior sample data; and train the first authentication model and/or the second authentication model based on the third operation behavior sample data and the identity authentication result corresponding to the third operation behavior sample data.

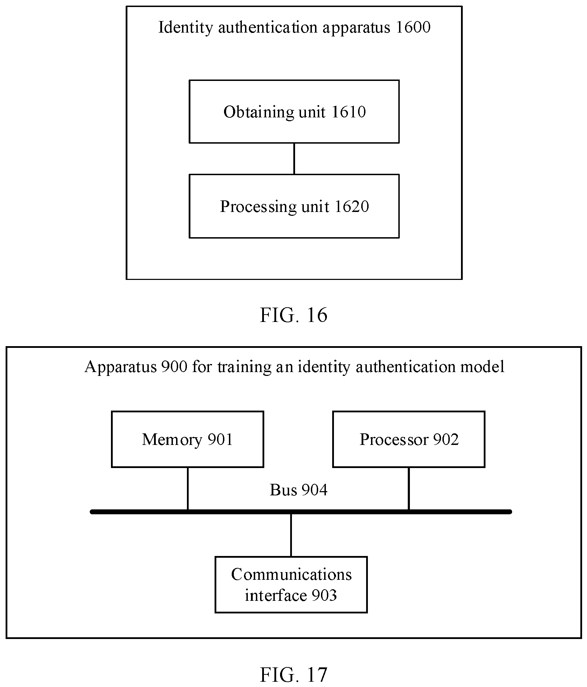

FIG. 16 is a schematic block diagram of an identity authentication apparatus 1600 according to an embodiment of this application. The identity authentication apparatus 1600 shown in FIG. 16 includes an obtaining unit 1610 and a processing unit 1620.

The obtaining unit 1610 and the processing unit 1620 may be configured to perform the identity authentication method in the embodiments of this application. Specifically, the obtaining unit 1610 may perform the foregoing step S810, and the processing unit 1620 may perform the foregoing steps S820 and S830.

The obtaining unit 1610 is configured to obtain first operation behavior data of a to-be-authenticated user; and obtain second operation behavior data of the to-be-authenticated user. The processing unit 1620 is configured to obtain, by using a first authentication model by inputting the first operation behavior data, a first recognition result output by the first authentication model; obtain, by using a second authentication model by inputting the second operation behavior data, a second recognition result output by the second authentication model, where the first authentication model and the second authentication model are an anomaly detection model and a classification model respectively; and input the first recognition result and the second recognition result into a decision fusion model to obtain an output identity authentication result, where the decision fusion model is used to determine the identity authentication result based on weight parameters of the first recognition result and the second recognition result.

Optionally, in an embodiment, the first operation behavior data and/or the second operation behavior data are/is data collected by a sensor.

Optionally, in an embodiment, a weight parameter of the decision fusion model is obtained by inputting operation behavior sample data in second sample data into the first authentication model and the second authentication model to obtain a recognition result that is of the second operation behavior sample data and is output by the first authentication model and the second authentication model, and performing training by using the recognition result of the second operation behavior sample data as an input of the decision fusion model and a label corresponding to the second operation behavior sample data as a target output of the decision fusion model, the second sample data includes the second operation behavior sample data and the label corresponding to the second operation behavior sample data, and the label corresponding to the second operation behavior sample data is used to indicate that a user corresponding to the second operation behavior sample data is an authenticated user or an unauthenticated user.

Optionally, in an embodiment, the first recognition result includes a matching score corresponding to the first operation behavior data and/or a matching result corresponding to the first operation behavior data; the second recognition result includes a matching score corresponding to the second operation behavior data and/or a matching result corresponding to the second operation behavior data; the matching score corresponding to the first operation behavior data is used to indicate a probability that the to-be-authenticated user is recognized as an authenticated user, the matching result corresponding to the first operation behavior data is used to indicate that the to-be-authenticated user is recognized as an authenticated user or an unauthenticated user, and the matching result corresponding to the first operation behavior data includes at least two matching results determined based on at least two thresholds and the matching score corresponding to the first operation behavior data; and the matching score corresponding to the second operation behavior data is used to indicate a probability that the to-be-authenticated user is recognized as an authenticated user, the matching result corresponding to the second operation behavior data is used to indicate that the to-be-authenticated user is recognized as an authenticated user or an unauthenticated user, and the matching result corresponding to the second operation behavior data includes at least two matching results determined based on at least two thresholds and the matching score corresponding to the second operation behavior data.

Optionally, in an embodiment, the processing unit 1620 is specifically configured to: obtain a first score feature based on the matching score corresponding to the first operation behavior data; obtain a second score feature based on the matching score corresponding to the second operation behavior data; and input the first score feature, the second score feature, the first recognition result, and the second recognition result into the decision fusion model to obtain the output identity authentication result.

Optionally, in an embodiment, the first operation behavior data and/or the second operation behavior data include/includes at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

It should be noted that the training apparatus 1500 and the identity authentication apparatus 1600 are embodied in a form of a functional unit. The term "unit" herein may be implemented in a form of software and/or hardware. This is not specifically limited.

For example, the "unit" may be a software program, a hardware circuit, or a combination thereof that implements the foregoing functions. The hardware circuit may include an application-specific integrated circuit (ASIC), an electronic circuit, a processor (for example, a shared processor, a dedicated processor, or a group processor) configured to execute one or more software or firmware programs and a memory, a merged logic circuit, and/or another suitable component that supports the described functions.

Therefore, the units in the examples described in the embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 17 is a schematic diagram of a hardware structure of an apparatus for training an identity authentication model according to an embodiment of this application. The training apparatus 900 (the apparatus 900 may be specifically a computer device) shown in FIG. 17 includes a memory 901, a processor 902, a communications interface 903, and a bus 904. The memory 901, the processor 902, and the communications interface 903 implement mutual communication connections through the bus 904.

The memory 901 may be a read-only memory (ROM), a static storage device, a dynamic storage device, or a random access memory (RAM). The memory 901 may store a program. When the program stored in the memory 901 is executed by the processor 902, the processor 902 is configured to perform the steps of the method for training an identity authentication model in the embodiments of this application, for example, perform the steps shown in FIG. 6 or FIG. 7.

It should be understood that the training apparatus shown in this embodiment of this application may be a server, for example, may be a server on a cloud, or may be a chip configured in a server on a cloud.

Alternatively, the apparatus shown in this embodiment of this application may be an intelligent terminal, or may be a chip configured in an intelligent terminal.

The processor 902 may be a general-purpose central processing unit (CPU), a microprocessor, an application-specific integrated circuit (ASIC), a graphics processing unit (GPU), or one or more integrated circuits, and is configured to execute a related program, to implement the method for training an identity authentication model in the method embodiments of this application.

The processor 902 may alternatively be an integrated circuit chip and has a signal processing capability. In an implementation process, the steps of the method for training an identity authentication model in this application may be completed by using a hardware integrated logic circuit in the processor 902 or instructions in a form of software.

The processor 902 may alternatively be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and the logical block diagrams that are disclosed in the embodiments of this application may be implemented or performed. The general-purpose processor may be a microprocessor, or the processor may be any conventional processor or the like. Steps of the methods disclosed with reference to the embodiments of this application may be directly executed and completed by a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 901. The processor 902 reads information in the memory 901, and completes, in combination with hardware of the processor 902, functions that need to be performed by the units included in the training apparatus shown in FIG. 17 in the embodiments of this application, or performs the method for training an identity authentication model shown in FIG. 6 or FIG. 7 in the method embodiments of this application.

The communications interface 903 uses a transceiver apparatus, for example but not for limitation, a transceiver, to implement communication between the training apparatus 900 and another device or a communications network.

The bus 904 may include a path for transmitting information between the components (for example, the memory 901, the processor 902, and the communications interface 903) of the training apparatus 900.

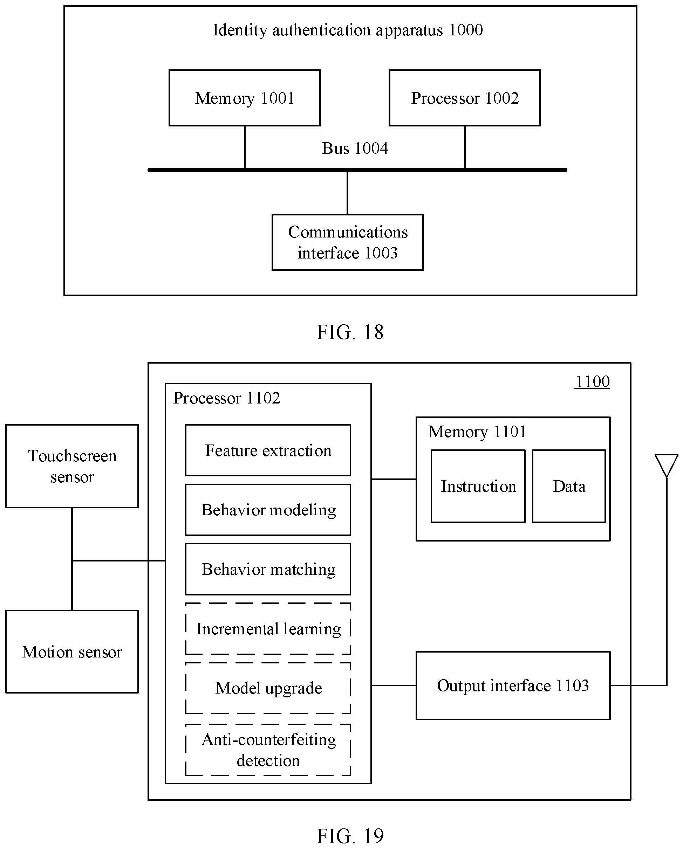

FIG. 18 is a schematic diagram of a hardware structure of an identity authentication apparatus according to an embodiment of this application. The identity authentication apparatus 1000 (the apparatus 1000 may be specifically a computer device) shown in FIG. 18 includes a memory 1001, a processor 1002, a communications interface 1003, and a bus 1004. The memory 1001, the processor 1002, and the communications interface 1003 implement mutual communication connections through the bus 1004.

The memory 1001 may be a read-only memory (ROM), a static storage device, a dynamic storage device, or a random access memory (RAM). The memory 1001 may store a program. When the program stored in the memory 1001 is executed by the processor 1002, the processor 1002 is configured to perform the steps of the identity authentication method in the embodiments of this application, for example, perform the steps shown in FIG. 8.

It should be understood that the apparatus shown in this embodiment of this application may be an intelligent terminal, or may be a chip configured in an intelligent terminal.

The processor 1002 may be a general-purpose central processing unit (CPU), a microprocessor, an application-specific integrated circuit (ASIC), a graphics processing unit (GPU), or one or more integrated circuits, and is configured to execute a related program, to implement the identity authentication method in the method embodiments of this application.

The processor 1002 may alternatively be an integrated circuit chip, and has a signal processing capability. In an implementation process, the steps of the identity authentication method in this application may be completed by using a hardware integrated logic circuit in the processor 1002 or instructions in a form of software.

The processor 1002 may alternatively be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and the logical block diagrams that are disclosed in the embodiments of this application may be implemented or performed. The general-purpose processor may be a microprocessor, or the processor may be any conventional processor or the like. Steps of the methods disclosed with reference to the embodiments of this application may be directly executed and completed by a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1001. The processor 1002 reads information in the memory 1001, and completes, in combination with hardware of the processor 1002, functions that need to be performed by the units included in the apparatus shown in FIG. 16 in the embodiments of this application, or performs the identity authentication method shown in FIG. 8 in the method embodiments of this application.

The communications interface 1003 uses a transceiver apparatus, for example but not for limitation, a transceiver, to implement communication between the apparatus 1000 and another device or a communications network.

The bus 1004 may include a path for transmitting information between the components (for example, the memory 1001, the processor 1002, and the communications interface 1003) of the apparatus 1000.

It should be noted that, although only the memory, the processor, and the communications interface are shown in each of the training apparatus 900 and the apparatus 1000, in a specific implementation process, a person skilled in the art should understand that the training apparatus 900 and the apparatus 1000 each may further include another component necessary for normal running. In addition, based on a specific requirement, a person skilled in the art should understand that the training apparatus 900 and the apparatus 1000 each may further include a hardware component for implementing another additional function. In addition, a person skilled in the art should understand that the training apparatus 900 and the apparatus 1000 each may alternatively include only components necessary for implementing the embodiments of this application, but not necessarily include all the components shown in FIG. 17 or FIG. 18.

FIG. 19 is a schematic diagram of a hardware structure of an identity authentication apparatus and an apparatus for training an identity authentication model according to an embodiment of this application. The apparatus 1100 (the apparatus 1100 may be specifically a computer device) shown in FIG. 19 includes a memory 1101, a processor 1102, and an output interface 1103.

The memory 1101 may be a read-only memory (ROM), a static storage device, a dynamic storage device, or a random access memory (RAM). The memory 1101 may store program instructions and data. When the program instructions stored in the memory 1101 are executed by the processor 1102, the processor 1102 is configured to perform steps of the identity authentication method or the method for training an identity authentication model in the embodiments of this application.

For example, the processor 1102 receives data of a touchscreen sensor and a motion sensor, and can implement corresponding functions in the identity authentication process in the foregoing embodiment, including feature extraction and behavior matching in FIG. 19. For another example, the processor 1102 receives data of a touchscreen sensor and a motion sensor, and can implement corresponding functions in the training process of the identity authentication model in the foregoing embodiment, including feature extraction, behavior modeling, and the like in FIG. 19. Further, the processor 1102 may be further configured to implement another function in FIG. 5.

It should be understood that the apparatus shown in this embodiment of this application may be an intelligent terminal, or may be a chip configured in an intelligent terminal.

The processor 1102 may be a general-purpose central processing unit (CPU), a microprocessor, an application-specific integrated circuit (ASIC), a graphics processing unit (GPU), or one or more integrated circuits, and is configured to execute a related program, to implement the identity authentication method or the method for training an identity authentication model in the method embodiments of this application.

The processor 1102 may alternatively be an integrated circuit chip and has a signal processing capability. In an implementation process, each step of the identity authentication method or the method for training an identity authentication model in this application may be implemented by using an integrated logic circuit of hardware in the processor 1102 or instructions in a form of software.

The processor 1102 may alternatively be a general-purpose processor, a digital signal processor (DSP), an application-specific integrated circuit (ASIC), a field programmable gate array (FPGA) or another programmable logic device, a discrete gate or transistor logic device, or a discrete hardware component. The methods, the steps, and the logical block diagrams that are disclosed in the embodiments of this application may be implemented or performed. The general-purpose processor may be a microprocessor, or the processor may be any conventional processor or the like. Steps of the methods disclosed with reference to the embodiments of this application may be directly executed and completed by a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and implements, in combination with hardware of the processor 1102, a function that needs to be performed by the unit included in the apparatus shown in FIG. 15 or FIG. 16 in the implementation of this application; or performs the method shown in FIG. 6, FIG. 7, or FIG. 8 in the method embodiment of this application.

The communications interface 1103 uses a transceiver apparatus, for example but not for limitation, a transceiver, to implement communication between the training apparatus 1100 and another device or a communications network.

It should be noted that although only the memory, the processor, and the output interface in the apparatus 1100 are illustrated, in a specific implementation process, a person skilled in the art should understand that the apparatus 1100 may further include another component necessary for normal running. In addition, based on a specific requirement, a person skilled in the art should understand that the apparatus 1100 may further include a hardware component for implementing another additional function. In addition, a person skilled in the art should understand that the apparatus 1100 may alternatively include only components necessary for implementing the embodiments of this application, but not necessarily include all the components shown in FIG. 19.

It should be understood that, the processor in the embodiments of this application may be a central processing unit (CPU). The processor may alternatively be another general-purpose processor, a digital signal processor (DSP), an application-specific integrated circuit (ASIC), a field programmable gate array (FPGA), or another programmable logic device, discrete gate or transistor logic device, a discrete hardware component, or the like. The general-purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. Through an example rather than a limitative description, random access memories (RAMs) in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

All or a part of the foregoing embodiments may be implemented by software, hardware, firmware, or any combination thereof. When software is used to implement the embodiments, all or a part of the foregoing embodiments may be implemented in a form of a computer program product. The computer program product includes one or more computer instructions or computer programs. When the computer instructions or the computer programs are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of' means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division, and there may be another division manner during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one location, or may be distributed on a plurality of network units. A part or all of the units may be selected based on an actual requirement to achieve the objectives of the solutions of the embodiments.

In addition, the functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a software product. The software product is stored in a storage medium, and includes several instructions for instructing a computer device (which may be a personal computer, a server, a network device, or the like) to execute all or a part of steps of the method in the embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An identity authentication method, comprising:

obtaining first operation behavior data of a to-be-authenticated user;

obtaining second operation behavior data of the to-be-authenticated user;

obtaining, by using a first authentication model by inputting the first operation behavior data, a first recognition result output by the first authentication model;

obtaining, by using a second authentication model by inputting the second operation behavior data, a second recognition result output by the second authentication model, wherein

the first authentication model and the second authentication model are an anomaly detection model and a classification model respectively; and

inputting the first recognition result and the second recognition result into a decision fusion model to obtain an output identity authentication result, wherein the decision fusion model is used to determine the identity authentication result based on weight parameters of the first recognition result and the second recognition result.

2. The method according to claim 1, wherein a model parameter of the first authentication model is obtained by performing training based on first sample data, the first sample data comprises first operation behavior sample data and a label corresponding to the first operation behavior sample data, and the label corresponding to the first operation behavior sample data is used to indicate that a user corresponding to the first operation behavior sample data is an authenticated user or an unauthenticated user.

3. The method according to claim 1 or 2, wherein the first operation behavior data and/or the second operation behavior data are/is data collected by a sensor.

4. The method according to any one of claims 1 to 3, wherein the anomaly detection model comprises a one-class support vector machine SVM model or an isolation forest, and the classification model comprises an SVM model or a neural network.

5. The method according to any one of claims 1 to 4, wherein a weight parameter of the decision fusion model is obtained by inputting second operation behavior sample data in second sample data into the first authentication model and the second authentication model to obtain a recognition result that is of the second operation behavior sample data and is output by the first authentication model and the second authentication model, and performing training by using the recognition result of the second operation behavior sample data as an input of the decision fusion model and a label corresponding to the second operation behavior sample data as a target output of the decision fusion model, the second sample data comprises the second operation behavior sample data and the label corresponding to the second operation behavior sample data, and the label corresponding to the second operation behavior sample data is used to indicate that a user corresponding to the second operation behavior sample data is an authenticated user or an unauthenticated user.

6. The method according to any one of claims 1 to 5, wherein

the first recognition result comprises a matching score corresponding to the first operation behavior data and/or a matching result corresponding to the first operation behavior data;

the second recognition result comprises a matching score corresponding to the second operation behavior data and/or a matching result corresponding to the second operation behavior data;

the matching score corresponding to the first operation behavior data is used to indicate a probability that the to-be-authenticated user is recognized as an authenticated user, the matching result corresponding to the first operation behavior data is used to indicate that the to-be-authenticated user is recognized as an authenticated user or an unauthenticated user, and the matching result corresponding to the first operation behavior data comprises at least two matching results determined based on at least two thresholds and the matching score corresponding to the first operation behavior data; and

the matching score corresponding to the second operation behavior data is used to indicate a probability that the to-be-authenticated user is recognized as an authenticated user, the matching result corresponding to the second operation behavior data is used to indicate that the to-be-authenticated user is recognized as an authenticated user or an unauthenticated user, and the matching result corresponding to the second operation behavior data comprises at least two matching results determined based on at least two thresholds and the matching score corresponding to the second operation behavior data.

7. The method according to claim 6, wherein the inputting the first recognition result and the second recognition result into a decision fusion model to obtain an output identity authentication result comprises:

obtaining a first score feature based on the matching score corresponding to the first operation behavior data;

obtaining a second score feature based on the matching score corresponding to the second operation behavior data; and

inputting the first score feature, the second score feature, the first recognition result, and the second recognition result into the decision fusion model to obtain the output identity authentication result.

8. The method according to any one of claims 1 to 7, wherein the first operation behavior data or the second operation behavior data comprises at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

9. A method for training an identity authentication model, wherein the identity authentication model comprises a first authentication model, a second authentication model, and a decision fusion model, the first authentication model and the second authentication model are an anomaly detection model and a classification model respectively, and the method comprises:

obtaining second sample data, wherein the second sample data comprises second operation behavior sample data and a label corresponding to the second operation behavior sample data, and the label corresponding to the second operation behavior sample data is used to indicate that a user corresponding to the second operation behavior sample data is an authenticated user or an unauthenticated user;

inputting the second operation behavior sample data in the second sample data into the first authentication model and the second authentication model to obtain a recognition result of the second operation behavior sample data, wherein a model parameter of the first authentication model is obtained by performing training based on first sample data, the first sample data comprises first operation behavior sample data and a label corresponding to the first operation behavior sample data, the label corresponding to the first operation behavior sample data is used to indicate that a user corresponding to the first operation behavior sample data is an authenticated user or an unauthenticated user, a model parameter of the second authentication model is obtained by performing training based on fifth sample data, the fifth sample data comprises fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user; and

performing training by using the recognition result of the second operation behavior sample data as an input of the decision fusion model and the label corresponding to the second operation behavior sample data as a target output of the decision fusion model, to obtain a trained decision fusion model.

10. The method according to claim 9, wherein the recognition result of the second operation behavior sample data comprises a recognition result output by the first authentication model and a recognition result output by the second authentication model; the recognition result output by the first authentication model comprises a matching score corresponding to the second operation behavior sample data and output by the first authentication model and/or a matching result corresponding to the second operation behavior sample and output by the first authentication model; and the recognition result output by the second authentication model comprises a matching score corresponding to the second operation behavior sample data and output by the second authentication model and/or a matching result corresponding to the second operation behavior sample data and output by the second authentication model; and

the matching score corresponding to the second operation behavior sample data is used to indicate a probability that the user corresponding to the second operation behavior sample data is recognized as an authenticated user, the matching result corresponding to the second operation behavior sample data is used to indicate that the user corresponding to the second operation behavior sample data is recognized as an authenticated user or an unauthenticated user, and the matching result corresponding to the second operation behavior sample data comprises at least two matching results determined based on at least two thresholds and the matching score corresponding to the second operation behavior sample data.

11. The method according to claim 10, wherein the at least two thresholds comprise a first threshold, and the method further comprises:

obtaining fourth sample data, wherein the fourth sample data comprises fourth operation behavior sample data and a label corresponding to the fourth operation behavior sample data, and the label corresponding to the fourth operation behavior sample data is used to indicate that a user corresponding to the fourth operation behavior sample data is an authenticated user or an unauthenticated user;

inputting the fourth operation behavior sample data into the first authentication model to obtain a matching score corresponding to the fourth operation behavior sample data and output by the first authentication model, wherein the matching score corresponding to the fourth operation behavior sample data is used to indicate a probability that the user corresponding to the fourth operation behavior sample data is recognized as an authenticated user; determining, based on a plurality of candidate thresholds, a plurality of candidate matching results corresponding to the matching score corresponding to the fourth operation behavior sample data, wherein the plurality of candidate matching results are used to indicate that the user corresponding to the fourth operation behavior sample data is recognized as an authenticated user or an unauthenticated user; and determining a candidate threshold corresponding to a candidate matching result whose accuracy meets a preset condition in the plurality of candidate matching results, as the first threshold.

12. The method according to claim 10 or 11, wherein the performing training by using the recognition result of the second operation behavior data as an input of the decision fusion model and the label corresponding to the second operation behavior data as a target output of the decision fusion model, to obtain a trained decision fusion model comprises:

obtaining a first score feature of the second operation behavior sample data based on the matching score corresponding to the second operation behavior sample data and output by the first authentication model; obtaining a second score feature of the second operation behavior sample data based on the matching score corresponding to the second operation behavior sample data and output by the second authentication model; and performing training by using the first score feature of the second operation behavior sample data, the second score feature of the second operation behavior sample data, and the recognition result of the second operation behavior sample data as an input of the decision fusion model, and using the label corresponding to the second operation behavior sample data as a target output of the decision fusion model.

13. The method according to any one of claims 9 to 12, wherein the second operation behavior sample data comprises at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

14. The method according to any one of claims 9 to 13, wherein the second sample data is obtained by performing screening based on sliding duration of the user on a touchscreen and/or a quantity of touch points of the user on the touchscreen.

15. The method according to any one of claims 9 to 14, wherein the method further comprises:

obtaining third sample data, wherein the third sample data comprises third operation behavior sample data; inputting the third operation behavior sample data into the first authentication model to obtain a recognition result that is of the third operation behavior sample data and is output by the first authentication model; inputting the third operation behavior sample data into the second authentication model to obtain a recognition result that is of the third operation behavior sample data and is output by the second authentication model; inputting the recognition result that is of the third operation behavior sample data and is output by the first authentication model and the recognition result that is of the third operation behavior sample data and is output by the second authentication model, into the trained decision fusion model to obtain an identity authentication result corresponding to the third operation behavior sample data; and training the first authentication model and/or the second authentication model based on the third operation behavior sample data and the identity authentication result corresponding to the third operation behavior sample data.

16. An identity authentication apparatus, comprising:

an obtaining unit, configured to:

obtain first operation behavior data of a to-be-authenticated user; and obtain second operation behavior data of the to-be-authenticated user; and

a processing unit, configured to:

obtain, by using a first authentication model by inputting the first operation behavior data, a first recognition result output by the first authentication model;

obtain, by using a second authentication model by inputting the second operation behavior data, a second recognition result output by the second authentication model, wherein

the first authentication model and the second authentication model are an anomaly detection model and a classification model respectively; and

input the first recognition result and the second recognition result into a decision fusion model to obtain an output identity authentication result, wherein the decision fusion model is used to determine the identity authentication result based on weight parameters of the first recognition result and the second recognition result.

**17.** The apparatus according to claim 16, wherein a weight parameter of the decision fusion model is obtained by inputting second operation behavior sample data in second sample data into the first authentication model and the second authentication model to obtain a recognition result that is of the second operation behavior sample data and is output by the first authentication model and the second authentication model, and performing training by using the recognition result of the second operation behavior sample data as an input of the decision fusion model and a label corresponding to the second operation behavior sample data as a target output of the decision fusion model, the second sample data comprises the second operation behavior sample data and the label corresponding to the second operation behavior sample data, and the label corresponding to the second operation behavior sample data is used to indicate that a user corresponding to the second operation behavior sample data is an authenticated user or an unauthenticated user.

**18.** The apparatus according to claim 16 or 17, wherein

the first recognition result comprises a matching score corresponding to the first operation behavior data and/or a matching result corresponding to the first operation behavior data;

the second recognition result comprises a matching score corresponding to the second operation behavior data and/or a matching result corresponding to the second operation behavior data;

the matching score corresponding to the first operation behavior data is used to indicate a probability that the to-be-authenticated user is recognized as an authenticated user, the matching result corresponding to the first operation behavior data is used to indicate that the to-be-authenticated user is recognized as an authenticated user or an unauthenticated user, and the matching result corresponding to the first operation behavior data comprises at least two matching results determined based on at least two thresholds and the matching score corresponding to the first operation behavior data; and

the matching score corresponding to the second operation behavior data is used to indicate a probability that the to-be-authenticated user is recognized as an authenticated user, the matching result corresponding to the second operation behavior data is used to indicate that the to-be-authenticated user is recognized as an authenticated user or an unauthenticated user, and the matching result corresponding to the second operation behavior data comprises at least two matching results determined based on at least two thresholds and the matching score corresponding to the second operation behavior data.

**19.** The apparatus according to claim 18, wherein the processing unit is specifically configured to:

obtain a first score feature based on the matching score corresponding to the first operation behavior data;

obtain a second score feature based on the matching score corresponding to the second operation behavior data; and

input the first score feature, the second score feature, the first recognition result, and the second recognition result into the decision fusion model to obtain the output identity authentication result.

**20.** The apparatus according to any one of claims 16 to 19, wherein the first operation behavior data and/or the second operation behavior data comprise/comprises at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

**21.** An apparatus for training an identity authentication model, wherein the identity authentication model comprises a first authentication model, a second authentication model, and a decision fusion model, the first authentication model and the second authentication model are an anomaly detection model and a classification model respectively, and the apparatus comprises:

an obtaining unit, configured to obtain second sample data, wherein the second sample data comprises second operation behavior sample data and a label corresponding to the second operation behavior sample data, and the label corresponding to the second operation behavior sample data is used to indicate that a user corresponding to the second operation behavior sample data is an authenticated user or an unauthenticated user; and a processing unit, configured to:

input the second operation behavior sample data in the second sample data into the first authentication model and the second authentication model to obtain a recognition result of the second operation behavior data, wherein a model parameter of the first authentication model is obtained by performing training based on first sample data, the first sample data comprises first operation behavior sample data and a label corresponding to the first operation behavior sample data, the label corresponding to the first operation behavior sample data is used to indicate that a user corresponding to the first operation behavior sample data is an authenticated user or an unauthenticated user, a model parameter of the second authentication model is obtained by performing training based on fifth sample data, the fifth sample data comprises fifth operation behavior sample data and a label corresponding to the fifth operation behavior sample data, and the label corresponding to the fifth operation behavior sample data is used to indicate that a user corresponding to the fifth operation behavior data is an authenticated user or an unauthenticated user; and perform training by using the recognition result of the second operation behavior sample data as an input of the decision fusion model and the label corresponding to the second operation behavior sample data as a target output of the decision fusion model, to obtain a trained decision fusion model.

22. The apparatus according to claim 21, wherein the recognition result of the second operation behavior sample data comprises a recognition result output by the first authentication model and a recognition result output by the second authentication model; the recognition result output by the first authentication model comprises a matching score corresponding to the second operation behavior sample data and output by the first authentication model and/or a matching result corresponding to the second operation behavior sample and output by the first authentication model; and the recognition result output by the second authentication model comprises a matching score corresponding to the second operation behavior sample data and output by the second authentication model and/or a matching result corresponding to the second operation behavior sample data and output by the second authentication model; and the matching score corresponding to the second operation behavior sample data is used to indicate a probability that the user corresponding to the second operation behavior sample data is recognized as an authenticated user, the matching result corresponding to the second operation behavior sample data is used to indicate that the user corresponding to the second operation behavior sample data is recognized as an authenticated user or an unauthenticated user, and the matching result corresponding to the second operation behavior sample data comprises at least two matching results determined based on at least two thresholds and the matching score corresponding to the second operation behavior sample data.

23. The apparatus according to claim 22, wherein the at least two thresholds comprise a first threshold;

the obtaining unit is further configured to obtain fourth sample data, wherein the fourth sample data comprises fourth operation behavior sample data and a label corresponding to the fourth operation behavior sample data, and the label corresponding to the fourth operation behavior sample data is used to indicate that a user corresponding to the fourth operation behavior sample data is an authenticated user or an unauthenticated user; and the processing unit is further configured to:

input the fourth operation behavior sample data into the first authentication model to obtain a matching score corresponding to the fourth operation behavior sample data and output by the first authentication model, wherein the matching score corresponding to the fourth operation behavior sample data is used to indicate a probability that the user corresponding to the fourth operation behavior sample data is recognized as an authenticated user; determine, based on a plurality of candidate thresholds, a plurality of candidate matching results corresponding to the matching score corresponding to the fourth operation behavior sample data, wherein the plurality of candidate matching results are used to indicate that the user corresponding to the fourth operation behavior sample data is recognized as an authenticated user or an unauthenticated user; and determine a candidate threshold corresponding to a candidate matching result whose accuracy meets a preset condition in the plurality of candidate matching results, as the first threshold.

**24.** The apparatus according to claim 22 or 23, wherein the processing unit is specifically configured to:

obtain a first score feature of the second operation behavior sample data based on the matching score corresponding to the second operation behavior sample data and output by the first authentication model;

obtain a second score feature of the second operation behavior sample data based on the matching score corresponding to the second operation behavior sample data and output by the second authentication model; and

perform training by using the first score feature of the second operation behavior sample data, the second score feature of the second operation behavior sample data, and the recognition result of the second operation behavior sample data as an input of the decision fusion model, and using the label corresponding to the second operation behavior sample data as a target output of the decision fusion model.

**25.** The apparatus according to any one of claims 21 to 24, wherein the second operation behavior sample data comprises at least one of the following data: an x/y-axis coordinate of a touch point, a touch area, touch pressure, a touch speed, a touch acceleration, a touch track slope, a touch length, a touch displacement, a touch angle, a touch direction, acceleration x/y/z-axis data, or gyroscope x/y/z-axis data.

**26.** The apparatus according to any one of claims 21 to 25, wherein

the obtaining unit is further configured to obtain third sample data, wherein the third sample data comprises third operation behavior sample data; and

the processing unit is further configured to:

input the third operation behavior sample data into the first authentication model to obtain a recognition result that is of the third operation behavior sample data and is output by the first authentication model;

input the third operation behavior sample data into the second authentication model to obtain a recognition result that is of the third operation behavior sample data and is output by the second authentication model;

input the recognition result that is of the third operation behavior sample data and is output by the first authentication model and the recognition result that is of the third operation behavior sample data and is output by the second authentication model, into the trained decision fusion model to obtain an identity authentication result corresponding to the third operation behavior sample data; and

train the first authentication model and/or the second authentication model based on the third operation behavior sample data and the identity authentication result corresponding to the third operation behavior sample data.

**27.** An identity authentication apparatus, comprising a processor and a memory, wherein the processor is coupled to the memory, and the processor is configured to read and execute instructions in the memory to perform the method according to any one of claims 1 to 8.

**28.** An apparatus for training an identity authentication model, comprising a processor and a memory, wherein the processor is coupled to the memory, and the processor is configured to read and execute instructions in the memory to perform the training method according to any one of claims 9 to 15.

**29.** A computer-readable medium, wherein the computer-readable medium stores program code, and when the computer program code is run on a computer, the computer is enabled to perform the method according to any one of claims 1 to 8.

**30.** A computer-readable medium, wherein the computer-readable medium stores program code, and when the computer program code is run on a computer, the computer is enabled to perform the training method according to any one of claims 9 to 15.

FIG. 1

System architecture 100

```
┌─────────────────────┐
│ Data collection device│
│         160          │
└─────────────────────┘
          │
      Data stream
          │
          ▼
```

Database 130

Training device 120

Data stream

Execution device 110

Client device 140

Input data

I/O interface 112

Target model/rule 101

Calculation module 111

Data storage system 150

Output result

Preprocessing module 113

Preprocessing module 114

FIG. 2

300

Execution device 310

Data storage
system 350

Communications
network

Local device 301

Local device 302

Examples

FIG. 3

400

APP 410

Application
lock

Payment application

...

Identity authentication SDK

Framework

Data collection
module 420

Identity authentication
module 430

Native

Model
training

Identity
authentication

Storage module 440

Behavior
database

Identity
authentication model

Sensor manager

Kernel

Sensor driver

Motion sensor

Touchscreen
sensor

FIG. 4

| | | |
|---|---|---|
| Identity authentication module 500 | | |
| Feature extraction 510 | Behavior modeling 520 | Behavior matching 530 |
| Incremental learning 540 | Model upgrade 550 | Anti-counterfeiting detection 560 |

FIG. 5

700

Obtain first sample data — S710

Establish an identity authentication model — S720

Establish an anomaly detection model — S721

Establish a classification model — S722

FIG. 6

730

```
┌─────────────────────────────────────────────┐
│                                             │ ⟋ S731
│         Obtain second sample data           │
│                                             │
└─────────────────────────────────────────────┘
                      │
┌─────────────────────────────────────────────┐
│  Input second operation behavior sample data in the second │
│  sample data into a first authentication model and a second │ ⟋ S732
│  authentication model, to obtain a recognition result of the │
│  second operation behavior sample data      │
└─────────────────────────────────────────────┘
                      │
┌─────────────────────────────────────────────┐
│                                             │
│   Perform training by using the recognition result of the second │
│   operation behavior sample data as an input of a decision fusion │ ⟋ S733
│   model and a label corresponding to the second operation behavior │
│   sample data as a target output of the decision fusion model, to │
│   obtain a trained decision fusion model    │
│                                             │
└─────────────────────────────────────────────┘
```

FIG. 7

800

```
┌─────────────────────────────────────────────┐
│     Obtain first operation behavior data of a │
│     to-be-authenticated user; and obtain second│        S810
│          operation behavior data of the       │
│            to-be-authenticated user           │
└─────────────────────────────────────────────┘
```

```
┌─────────────────────────────────────────────┐
│   Obtain, by using a first authentication model by│
│   inputting the first operation behavior data, a first│
│   recognition result output by the first authentication│        S820
│   model; and obtain, by using a second authentication│
│   model by inputting the second operation behavior│
│   data, a second recognition result output by  │
│          the second authentication model       │
└─────────────────────────────────────────────┘
```

```
┌─────────────────────────────────────────────┐
│                                               │        S830
│     Input the first recognition result and the second│
│   recognition result into a decision fusion model to│
│     obtain an output identity authentication result│
│                                               │
└─────────────────────────────────────────────┘
```

FIG. 8

Anomaly
detection model
910

Behavior data
of a to-be-
authenticated user

Classification
model 920

First recognition result

Decision
fusion model
930

Second recognition result

Identity
authentication
result

FIG. 9

Anomaly
detection model
1010

First matching score

Behavior data
of a to-be-
authenticated user

Decision
fusion model
1030

Identity
authentication
result

Classification
model 1020

Second matching score

FIG. 10

EP 4 120 105 A1

| Data collection module | Identity authentication module | APP integrating an identity authentication SDK |
|---|---|---|

S1110. Obtain operation habit behavior data of a user

S1120. Data preprocessing

S1121. When preset duration is exceeded and/or a data amount exceeds a preset amount, send a modeling instruction

1130. Establish an identity authentication model

S1140. Start identity authentication

S1141. Feed back context environment information

S1150. Listen to operation behavior data of a to-be-authenticated user

S1160. Initiate an identity authentication request

S1170. Match the operation habit behavior data of the to-be-authenticated user with the identity authentication model

S1171. Return an identity authentication result

FIG. 11

Auxiliary identity authentication

Face/Fingerprint recognition

Success → Identity authentication method in this application

Success → Authentication success

Failure → Ask a user for password authentication

Failure → Ask a user for password authentication

**FIG. 12**

Continuous application protection

APP (login state) → Identity authentication method in this application

Success → Authentication success

Failure → Display an application lock or another authentication interface

**FIG. 13**

Payment risk control

APP payment → Identity authentication method in this application → Risk control information → Service risk control system

Unqualified → Another authentication mode

Qualified → Payment success

FIG. 14

Apparatus 1500 for training an identity authentication model

Obtaining unit 1510

Processing unit 1520

FIG. 15

Identity authentication apparatus 1600

Obtaining unit 1610

Processing unit 1620

FIG. 16

Apparatus 900 for training an identity authentication model

Memory 901

Processor 902

Bus 904

Communications interface 903

FIG. 17

Identity authentication apparatus 1000

| Memory 1001 | | Processor 1002 |

Bus 1004

Communications
interface 1003

FIG. 18

1100

Processor 1102

Feature extraction

Behavior modeling

Behavior matching

Incremental learning

Model upgrade

Anti-counterfeiting
detection

Touchscreen
sensor

Motion sensor

Memory 1101

Instruction | Data

Output interface 1103

FIG. 19

## INTERNATIONAL SEARCH REPORT

International application No.

**PCT/CN2021/085319**

| | |
|---|---|
| **A. CLASSIFICATION OF SUBJECT MATTER** | |
| G06F 21/32(2013.01)i; G06N 3/08(2006.01)i; G06F 21/31(2013.01)i | |
| According to International Patent Classification (IPC) or to both national classification and IPC | |

**B. FIELDS SEARCHED**

Minimum documentation searched (classification system followed by classification symbols)

G06F G06N

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 身份, 认证, 验证, 模型, 第一, 第二, 分类, 融合, 权重, 训练, 异常, 用户, 分数, 概率, 触摸, 加速度, identity, authentication, model, first, second, classification, fusion, weight, train, abnormal, score, probability, touch, acceleration

**C. DOCUMENTS CONSIDERED TO BE RELEVANT**

| Category* | Citation of document, with indication, where appropriate, of the relevant passages | Relevant to claim No. |
|---|---|---|
| X | CN 106039711 A (NETEASE (HANGZHOU) NETWORK CO., LTD.) 26 October 2016 (2016-10-26) description paragraphs [0042]-[0105], [0197]-[0204] | 1-30 |
| A | CN 110674483 A (GUANGDONG UNIVERSITY OF TECHNOLOGY) 10 January 2020 (2020-01-10) entire document | 1-30 |
| A | CN 104239761 A (XI'AN JIAOTONG UNIVERSITY) 24 December 2014 (2014-12-24) entire document | 1-30 |
| A | CN 104408341 A (XI'AN JIAOTONG UNIVERSITY) 11 March 2015 (2015-03-11) entire document | 1-30 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2021** | **23 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/085319**

| Patent document cited in search report | | | Publication date (day/month/year) | Patent family member(s) | | | Publication date (day/month/year) |
|---|---|---|---|---|---|---|---|
| CN | 106039711 | A | 26 October 2016 | CN | 106039711 | B | 14 May 2019 |
| CN | 110674483 | A | 10 January 2020 | None | | | |
| CN | 104239761 | A | 24 December 2014 | CN | 104239761 | B | 27 June 2017 |
| CN | 104408341 | A | 11 March 2015 | CN | 104408341 | B | 27 June 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202010262293